# EUROPEAN PATENT APPLICATION

(11) **EP 4 116 938 A1**
(43) Date of publication of application: **11.01.2023**
(21) Application number: 21764811.2
(22) Date of filing: 02.03.2021
(51) Int. Cl.: G06T 19/00, G06T 7/00, G06N 20/00

(54) **IMAGE GENERATING DEVICE, IMAGE GENERATING METHOD, RECORDING MEDIUM GENERATING METHOD, LEARNING MODEL GENERATING DEVICE, LEARNING MODEL GENERATING METHOD, LEARNING MODEL, DATA PROCESSING DEVICE, DATA PROCESSING METHOD, INFERRING METHOD, ELECTRONIC INSTRUMENT, GENERATING METHOD, PROGRAM, AND NON-TRANSITORY COMPUTER-READABLE MEDIUM**

(30) Priority: 05.03.2020 JP 2020038061
(71) Applicant: Sony Semiconductor Solutions Corporation, Atsugi-shi Kanagawa 243-0014 (JP)
(72) Inventor: HATA, Ryuhei, Atsugi-shi, Kanagawa 243-0014 (JP); ANDO, Yoshiki, Atsugi-shi, Kanagawa 243-0014 (JP); SHINMI, Yusuke, Atsugi-shi, Kanagawa 243-0014 (JP); HOSAKA, Hajime, Atsugi-shi, Kanagawa 243-0014 (JP); MORIYAMA, Yutaka, Atsugi-shi, Kanagawa 243-0014 (JP); NOMURA, Yoshikuni, Atsugi-shi, Kanagawa 243-0014 (JP)
(74) Representative: Müller Hoffmann & Partner
(86) International application number: PCT/JP2021/008019
(87) International publication number: WO 2021/177324

(57) **Abstract**

[Object]

Training data is acquired using a computer graphics.

[Solution]

An image generation method includes acquiring a CG model or an artificial image generated based on the CG model and performing, by a processor, processing on the CG model or the artificial image and generating metadata of a processed image used for AI learning used for an image acquired by a sensor or the artificial image.

## Description

### [Technical Field]

The present disclosure relates to an image generation device, an image generation method, a recording medium generation method, a learning model generation device, a learning model generation method, a learning model, a data processing device, a data processing method, an inference method, an electronic device, a generation method, a program and a non-temporary computer readable medium.

### [Background Art]

Today, deep learning and estimation model generation by machine learning and the like are being widely studied. When machine learning is performed, it is necessary to input a large amount of training data to the generated model. In addition, a large amount of training data is also necessary to perform validation. In order to collect training data used for generating a model using an image as an input, it is necessary to acquire an actual landscape as a picture and draw a painting. After this training data is collected, it is often necessary for a human who performs training to add an annotation to individual training data.

However, it takes time and effort to collect data and add annotations, and there is a high probability of human errors and the like occurring. When data in a situation, for example, a model such as a model for supporting automated driving at night and a model for correcting images taken by a predetermined camera, is trained, it is necessary to collect data in that situation, but collecting such data is generally costly. In addition, it is desirable to collect images of situations that are difficult to encounter in the first place such as scenes of accidents occurring in automated driving, images of pathology, and images during surgery, as training data, but there are various problems including ethical issues in causing these situations intentionally, and it is also difficult to encounter these situations unintentionally in a state in which data collection is possible.

### [Citation List]

### [Patent Literature]

[PTL 1]
JP H6-348840 A

### [Summary]

### [Technical Problem]

Here, the present disclosure realizes acquisition of training data using computer graphics.

### [Solution to Problem]

According to one embodiment, the data generation method is a method of generating data by a processor, which is a data generation method in which training data used for optimizing an estimation model in machine learning is acquired from a CG model.

An image based on parameters of an imaging camera may be acquired from the CG model.

The parameters of the camera may include parameters related to a lens of the camera.

The parameters related to the lens of the camera may be parameters based on at least one of a fisheye lens, a wide-angle lens, a telephoto lens, a macro lens and a standard lens.

The parameters related to the lens of the camera may be parameters related to at least one of blur, distortion, shading, flares and ghosts caused by the lens of the camera.

The parameters of the camera may include parameters related to a light receiving sensor of the camera.

The parameters related to the sensor of the camera may be parameters related to at least one of defects having a white pixel, a black pixel and a random pixel value.

The parameters related to the sensor of the camera may be parameters related to at least one of image plane phase difference acquisition pixels, polarization pixels, IR acquisition pixels, UV acquisition pixels, distance measurement pixels and temperature pixels.

The parameters related to the sensor of the camera may be parameters related to at least one of color filter characteristics, spectral characteristics, color filter arrangement, temperature characteristics, transformation efficiency, sensitivity and read order.

A compressed image based on parameters related to data compression may be acquired for an image transformed by parameters of an imaging camera acquired from the CG model.

The parameters related to data compression may include parameters related to at least one of a compression algorithm, a compression rate, a bit rate, a gradation and a color space transformation.

A multispectral image and a hyperspectral image may be acquired from the CG model.

An image may be acquired based on imaging conditions from the CG model.

The imaging conditions may relate to at least one of a type, a position and a direction of a light source.

The imaging conditions may relate to saturation of a pixel value.

The imaging conditions may relate to exposure.

A normal image that is an input image of the estimation model and an ideal image that is a desirable output image when the normal image is input may be separately acquired from the CG model.

The normal image and the ideal image may be acquired from the CG model using at least any one of the above methods.

The ideal image may be acquired by adding an annotation to the CG model.

The annotation may be added for each area or for each pixel of the ideal image.

The annotation may be added by being transformed by geometric transformation in the same transformation as the transformation in which the ideal image is generated from the CG model.

According to one embodiment, a learning method includes optimizing the estimation model using training data acquired using the data generation method according to any one of the above methods.

According to one embodiment, an estimation method includes executing an estimation using the estimation model optimized using training data acquired using the data generation method according to any one of the above methods.

In addition, according to one embodiment, an image generation method includes acquiring a CG model or an artificial image generated based on the CG model; and performing, by a processor, processing on the CG model or the artificial image; and generating metadata of a processed image used for AI learning used for an image acquired by a sensor or the artificial image.

The image generation method may further include selecting at least one parameter for processing the CG model or the artificial image; and applying to the CG model or the artificial image based on the selected parameter at a timing at which the CG model or the artificial image is generated.

The at least one parameter may be a parameter related to the sensor.

The sensor may include at least a camera.

The AI used for the image acquired by the sensor may be used to correct a change in the image caused by the sensor or the camera.

The image generation method may further include recording metadata of the processed image or the artificial image in a recording medium.

The metadata of the processed image or the artificial image may be associated with the artificial image and recorded in the storage medium.

According to one embodiment, an image generation device includes a processor, wherein the processor acquires a CG model or an artificial image generated based on the CG model, and performs processing on the CG model or the artificial image and generates metadata of a processed image used for AI learning used for an image acquired by a sensor or the artificial image.

According to one embodiment, a non-temporary computer readable medium stores a program to execute an image generation method when a processor is executed, the method including acquiring a CG model or an artificial image generated based on the CG model; and performing processing on the CG model or the artificial image and generating metadata of a processed image used for AI learning used for an image acquired by a sensor or the artificial image.

According to one embodiment, a learning model generation method is a learning model generation method of AI used for an image acquired by a sensor, the method including: acquiring first image data; acquiring second image data different from the first image data; and generating the learning model that outputs an image corresponding to the second image data when the first image data is input based on the first image data and the second image data, wherein the first image data is a CG model or an artificial image generated based on the CG model, and wherein the second image data is data obtained by performing processing by a processor on the CG model or the artificial image generated based on the CG model.

The second image data may be metadata of the second image.

According to one embodiment, a learning model generation device includes a processor and generates an AI learning model used for an image acquired by a sensor, wherein the processor acquires first image data, acquires second image data different from the first image data, and generates the learning model that outputs an image corresponding to the second image data when the first image data is input based on the first image data and the second image data, wherein the first image data is a CG model or an artificial image generated based on the CG model, and wherein the second image data is data obtained by performing processing on the CG model or the artificial image generated based on the CG model by the same processor as the processor or a processor different from the processor.

According to one embodiment, a non-temporary computer readable medium stores a program, in which, when the program is executed by a processor, the program executes a learning model generation method including acquiring first image data, acquiring second image data different from the first image data, and generating the learning model that outputs an image corresponding to the second image data when the first image data is input based on the first image data and the second image data, wherein the first image data is a CG model or an artificial image generated based on the CG model, and wherein the second image data is data obtained by performing processing on the CG model or the artificial image generated based on the CG model by the same processor as the processor or a processor different from the processor.

According to one embodiment, an inference method is an inference method of executing inference with an AI learning model used for an image acquired by a sensor, the inference method including: by a processor, acquiring input image data; and acquiring a processing result of the learning model from the learning model to which the input image data is input, wherein the learning model is a model generated by acquiring first image data and second image data different from the first image data, and learning based on the first image data and the second image data, wherein the first image data is an artificial image that is artificially generated, and wherein the second image data is data obtained by performing processing on the first image.

According to one embodiment, an electronic device is an electronic device that executes inference with an AI learning model used for an image acquired by a sensor, the electronic device including a control device, wherein the control device, when input image data is input, inputs the input image data to the learning model, acquires a processing result of the learning model to which the input image data is input, and outputs the acquired processing result, and wherein the learning model is a model trained with an artificial image that is artificially generated and a processed image obtained by performing processing on the artificial image.

According to one embodiment, a program is a program causing a processor to execute an inference method that executes inference with an AI learning model used for an image acquired by a sensor, wherein the inference method includes acquiring input image data, and acquiring a processing result of the learning model from the learning model to which the input image data is input, wherein the learning model is a model generated by acquiring first image data and second image data different from the first image data, and learning based on the first image data and the second image data, wherein the first image data is an artificial image that is artificially generated, and wherein the second image data is data obtained by performing processing on the first image.

According to one embodiment, a generation method is a generation method of generating an AI learning model used for an image acquired by a sensor including training a learning model in which, based on an artificial image that is artificially generated and a processed image obtained by performing processing on the artificial image, when an image corresponding to the artificial image acquired by a sensor is input, an image corresponding to the processed image is output.

An electronic device generation method may include recording the learning model generated by the above in a non-temporary computer readable medium.

According to one embodiment, a learning model is an AI learning model used for an image acquired by a sensor, the learning model including: a plurality of layers composed of a plurality of nodes, wherein each of the plurality of layers has a function and each of the plurality of nodes in each of the plurality of layers is connected to one or more nodes of the other layers of the plurality of layers via an edge, and wherein the edge has a weight based on an artificial image that is artificially generated and a processed image obtained by performing processing on the artificial image.

According to one embodiment, a non-temporary computer readable medium is a non-temporary computer readable medium in which an AI learning model used for an image acquired by a sensor is recorded, wherein the learning model includes a plurality of layers composed of a plurality of nodes, wherein each of the plurality of layers has a function and each of the plurality of nodes in each of the plurality of layers is connected to one or more nodes of the other layers of the plurality of layers via an edge, and wherein, for the edge, weight information obtained based on an artificial image that is artificially generated and a processed image obtained by performing processing on the artificial image is recorded in association with the edge.

According to one embodiment, a data processing method is a data processing method that processes data based on a result from a learning model, including: inputting a result of a learning model; generating processing data based on the result of the learning model; and outputting the processing data, wherein the result from the learning model is acquired by inputting acquired image data to a pre-trained learning model, and wherein the pre-trained learning model is trained with an artificial image that is artificially generated and a processed image obtained by performing processing on the artificial image.

According to one embodiment, a data processing device is a data processing device that processes data based on a result from a learning model, including a processor that executes inputting a result of a learning model, generating processing data based on the result of the learning model, and outputting the processing data, wherein the result from the learning model is acquired by inputting acquired image data to a pre-trained learning model, and wherein the pre-trained learning model is trained with an artificial image that is artificially generated and a processed image obtained by performing processing on the artificial image.

According to one embodiment, a program is a program causing a processor to execute a data processing method of processing data based on a result from a learning model, wherein the data processing method includes inputting a result of a learning model, generating processing data based on the result of the learning model, and outputting the processing data, wherein the result from the learning model is acquired by inputting acquired image data to a pre-trained learning model, and wherein the pre-trained learning model is trained with an artificial image that is artificially generated and a processed image obtained by performing processing on the artificial image.

According to one embodiment, an image generation method is an image generation method of generating an image used in AI learning, including: inputting an artificial image that is artificially generated; generating a processed image obtained by performing processing on the artificial image; and outputting the processed image.

### [Brief Description of Drawings]

[Fig. 1]

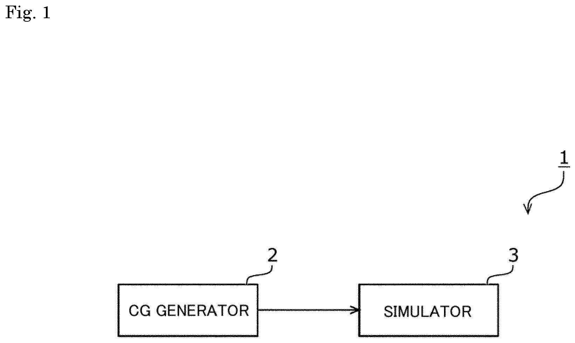

   Fig. 1 is a diagram showing an example of a data generation system according to one embodiment.
[Fig. 2]

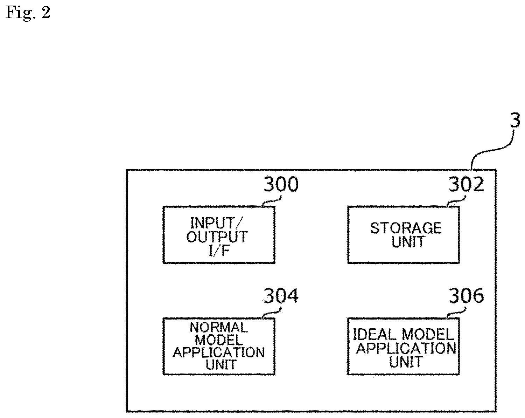

   Fig. 2 is a diagram showing an example of a simulator according to one embodiment.
[Fig. 3]

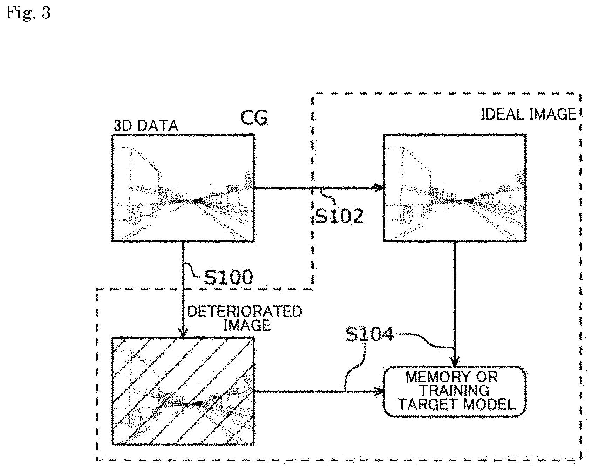

   Fig. 3 is a diagram showing an output example of the simulator according to one embodiment.
[Fig. 4]

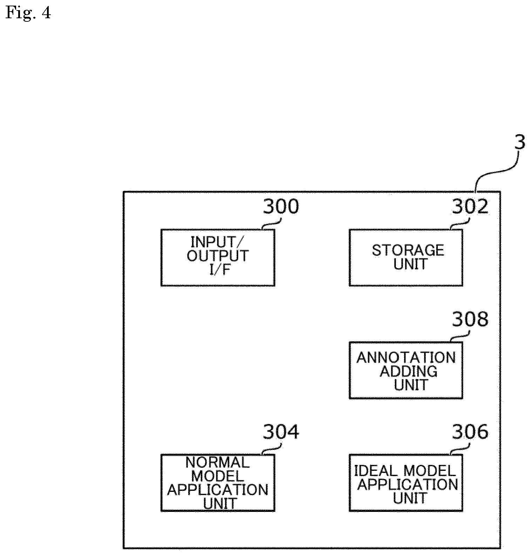

   Fig. 4 is a diagram showing an example of the simulator according to one embodiment.
[Fig. 5]

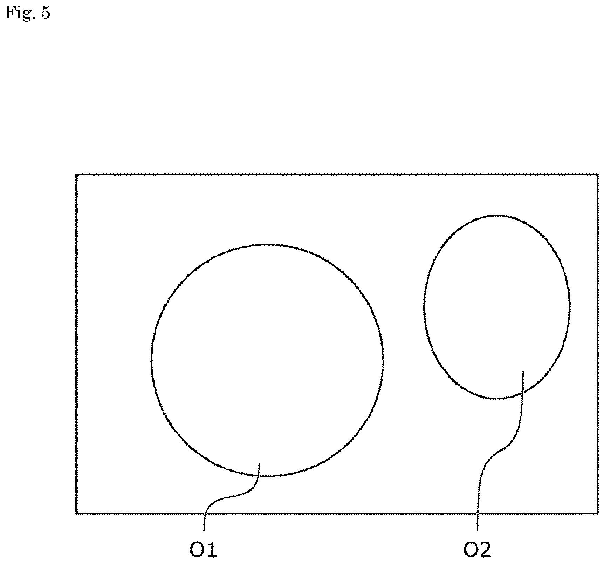

   Fig. 5 is a diagram showing outputs of a CG generator and a simulator according to one embodiment.
[Fig. 6]

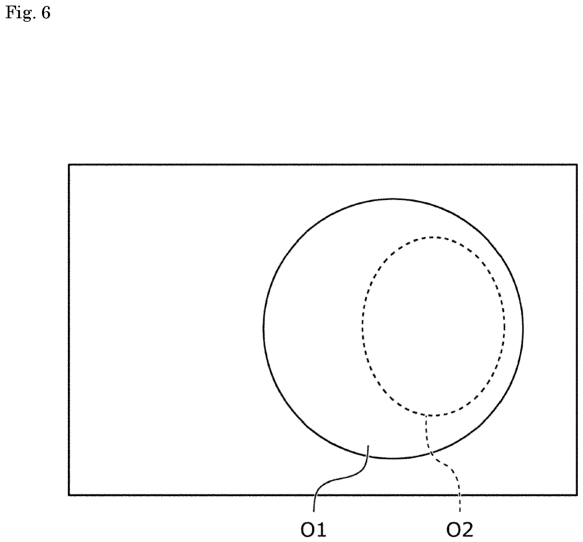

   Fig. 6 is a diagram showing outputs of a CG generator and a simulator according to one embodiment.
[Fig. 7]

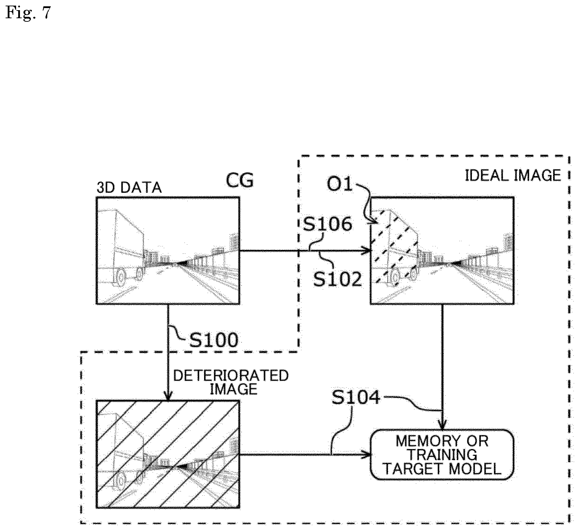

   Fig. 7 is a diagram showing an output example of the simulator according to one embodiment.
[Fig. 8]

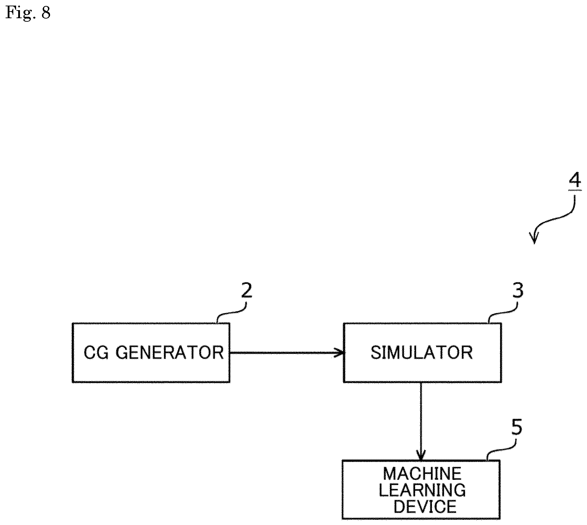

   Fig. 8 is a diagram showing an example of a machine learning system according to one embodiment.
[Fig. 9]

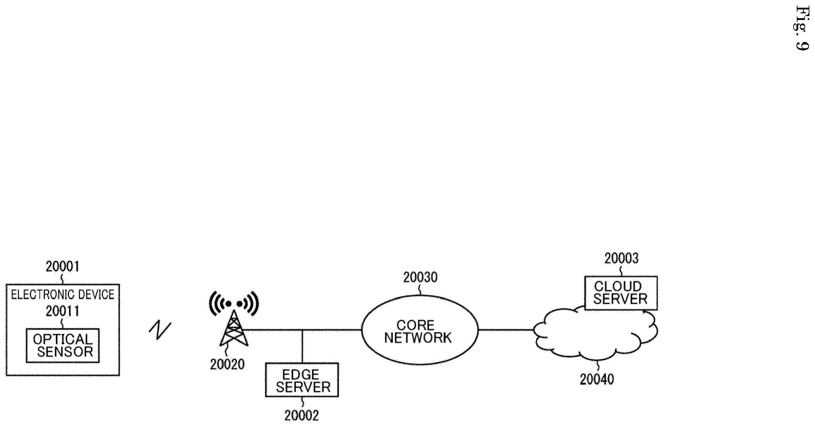

   Fig. 9 is a diagram showing a configuration example of a system including a device that performs an AI process.
[Fig. 10]

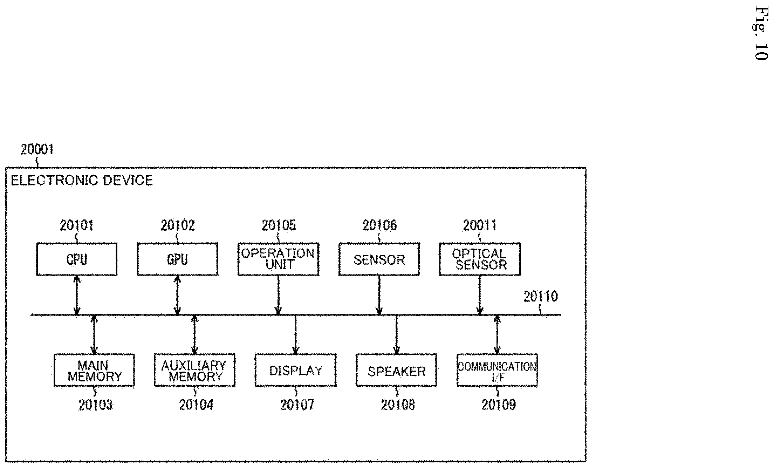

   Fig. 10 is a block diagram showing a configuration example of an electronic device.
[Fig. 11]

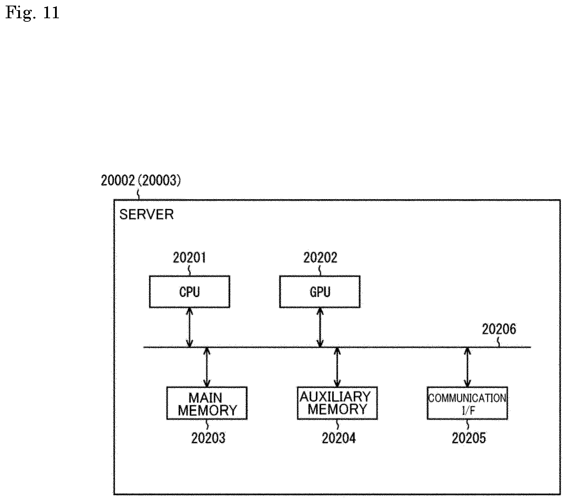

   Fig. 11 is a block diagram showing a configuration example of an edge server or a cloud server.
[Fig. 12]

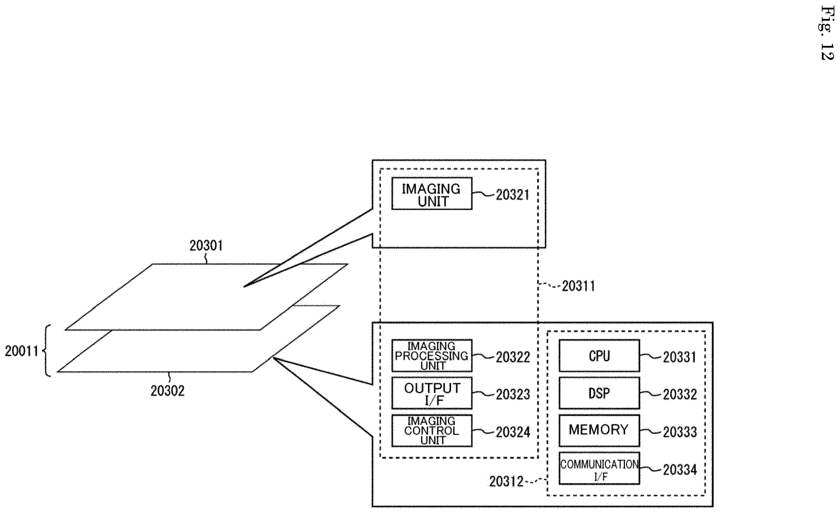

   Fig. 12 is a block diagram showing a configuration example of an optical sensor.
[Fig. 13]

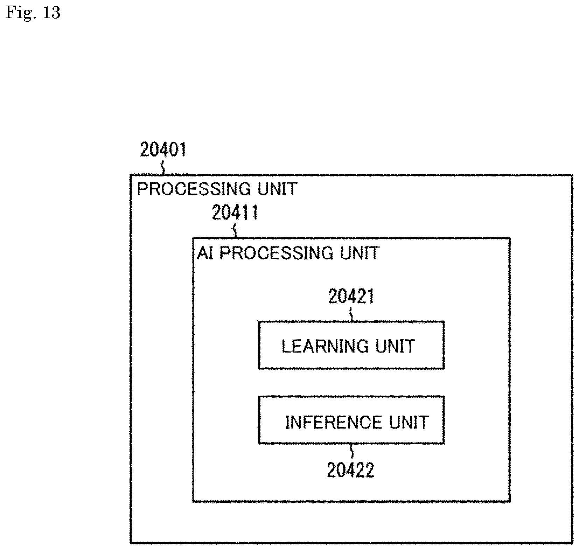

   Fig. 13 is a block diagram showing a configuration example of a processing unit.
[Fig. 14]

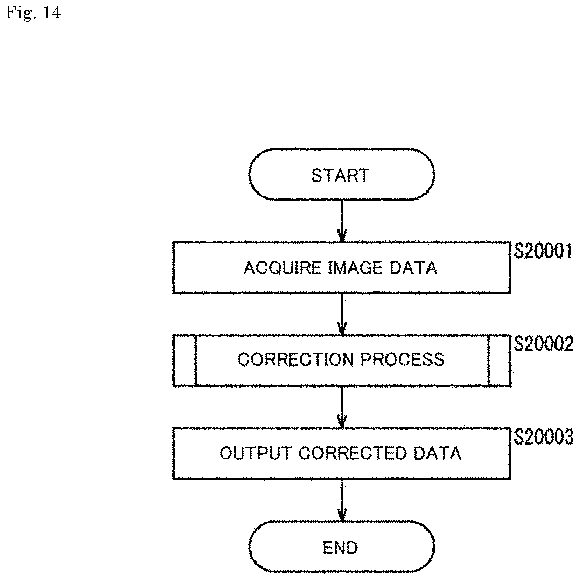

   Fig. 14 is a flowchart explaining a flow of a process using AI.
[Fig. 15]

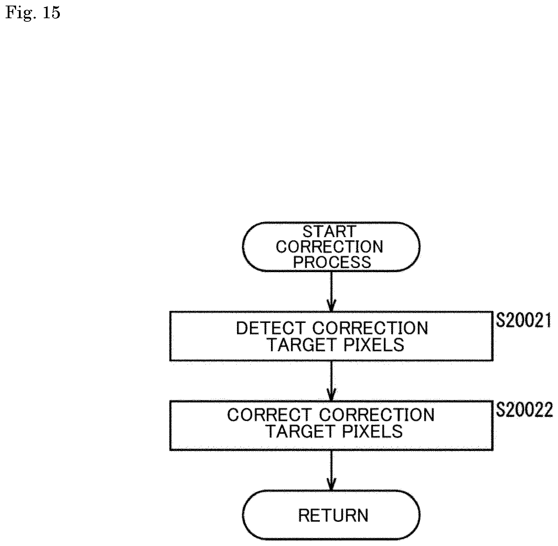

   Fig. 15 is a flowchart explaining a flow of a correction process.
[Fig. 16]

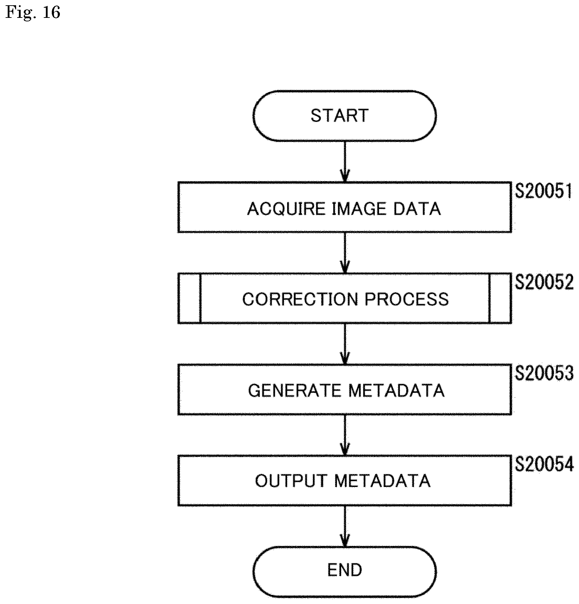

   Fig. 16 is a flowchart explaining a flow of a process using AI.
[Fig. 17]

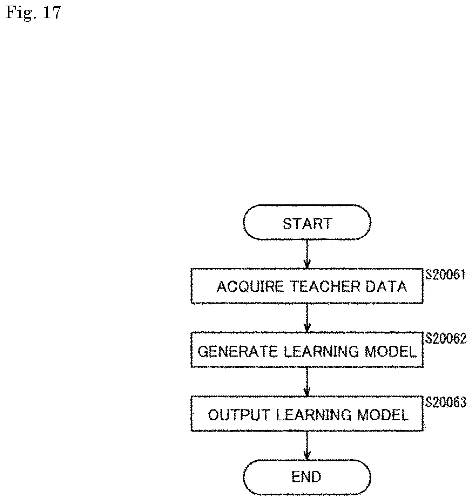

   Fig. 17 is a flowchart explaining a flow of a learning process.
[Fig. 18]

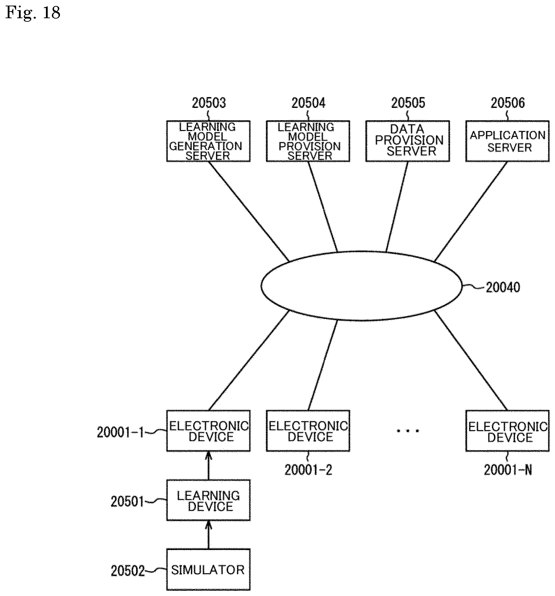

   Fig. 18 is a diagram showing a flow of data between a plurality of devices.

### [Description of Embodiments]

Hereinafter, embodiments of the present disclosure will be described with reference to the drawings.

### (First embodiment)

Fig. 1 is a diagram schematically showing an example of a data generation system according to a first embodiment. A data generation system 1 includes a CG generator 2 and a simulator 3. The data generation system 1 generates training data used for optimizing an estimation model in machine learning. In addition, an input/output interface (not shown) and the like may be provided.

The CG generator 2 generates computer graphics (hereinafter referred to as CG). The CG generator 2 generates a CG model including training data required for performing machine learning. Here, the CG model refers to a model of a 3D object formed in a virtual space, a surrounding environment and the like. In addition, when simply a CG (or a CG model) is mentioned below, there are cases in which this CG model is shown and cases of a CG image created using ray tracing or the like from the CG model, but these can be appropriately distinguished depending on the context.

The simulator 3 simulates the CG model output from the CG generator 2 according to various situations used for learning and outputs images that reproduce various situations.

The data generation system 1 can acquire images according to various situations when the simulator 3 processes the CG model generated by the CG generator 2. When the CG generator 2 outputs a precise CG model, compared to the actually captured image, it is possible to acquire training data with less noise with respect to the original image, and it is possible to improve the accuracy of the model trained by machine learning, and reduce the cost of data collection.

Hereinafter, the processes in the CG generator 2 and the simulator 3 will be described.

As described above, the CG generator 2 generates a CG model that is close to reality without adding noise or the like. The CG generator 2 is operated by an operator and executes creation of an object and the like. After an object is created by the operator, and the texture of the object and the like are set, the CG generator 2 uses physically based rendering such as ray tracing and generates a precise CG model according to the situation based on the object and a light source.

The data to be generated relates to various situations, but as an example, a case of learning training data used for automated driving of an automobile by the data generation system 1 is conceivable. Of course, it is possible to generate a CG model based on other environments, for example, a situation in an operating room, underwater, undersea, aerial photography, celestial bodies, space, indoors, microscopic objects and the like in the same manner as described below. These situations can be set appropriately based on the model to be trained in machine learning.

The CG generator 2 generates models of various objects, for example, other automobiles, bicycles, motorcycles, humans, roadsides, guardrails, puddles, frozen surfaces, and other obstacles, on models of roads, sidewalks and the like. This generation may be realized by the operator as described above, or when the operator designates an object, the CG generator 2 may perform generation automatically.

The CG generator 2 generates a CG model that visually detects the generated object, roads and the like from the inside of automobiles. Generation of the CG model is performed using appropriate rendering. The CG generator 2 simulates, for example, a state in which a light beam corresponding to a situation to be acquired as data is applied to a state of the surface and the inside of an object and renders it, and generates a precise CG according to the situation to be acquired.

The state of the surface and the inside of an object is, for example, information indicating the state of light reflection on a surface having a metallic texture in the case of an automobile, a surface having a soft skin texture in the case of a human, a surface having characteristics of a plant in the case of a roadside, a surface corresponding to a substance used in a building in the case of the building, a surface of another obstacle, or a surface corresponding to a substance on a surface layer.

The light beam is, for example, sunlight, tunnel lighting in a tunnel, or street or building light in a night situation. In addition, the light beam can also designate a direction. The CG generator 2 calculates a normal line of the light beam emitted to each area of each object, for example, by designating the position of the light source.

The CG generator 2 appropriately renders visual information detected by a human eye or camera after reflection by an object based on the information on the surface of such an object and the information of the light beam, and generates a precise CG model. The generated CG model may be a 3D CG model. When the 3D CG model is represented in two dimensions, it may be an image in which layers are set, and an object and radiation information are provided based on the 3D CG model for each appropriate layer.

The simulator 3 sets, for example, camera parameters, applies noise, distortion and the like based on the influence of the lens and the like to the model output by the CG generator 2, and calculates and generates image data based on device information to be acquired. For example, an image that can be acquired using parameters related to a camera lens optical system is acquired from the CG model based on the number of lenses and lens performance. In addition, deterioration based on the influence of a camera sensor (for example, a light receiving sensor) may be acquired by a simulation.

Fig. 2 is a diagram showing an example of the simulator 3. The simulator 3 includes an input/output I/F 300, a storage unit 302, a normal model application unit 304, and an ideal model application unit 306.

The input/output I/F 300 is an interface for inputting data to the simulator 3 and outputting data from the simulator 3. Although shown as the input/output I/F 300, of course, an input I/F and an output I/F may be provided separately. Here, the CG generator 2 itself may be provided in the simulator 3. In this case, the input step can be omitted.

The storage unit 302 temporarily or non-temporarily stores data required for the simulator 3. The storage unit 302 includes, for example, a memory. In addition, when at least one of functions of the simulator 3 is executed by software, the storage unit 302 may store a program for executing at least one of functions of the simulator 3. For example, the storage unit 302 may store data input via the input/output I/F 300 or may store output data after the model is applied. In addition, in calculation in the simulator 3, the progress and the like may be appropriately stored.

The simulator 3 generates, for example, visual perception information based on the line of sight of a driver in an automobile or the position and orientation of the camera used for automated driving from the CG model generated by the CG generator 2 acquired via the input/output I/F 300.

The normal model application unit 304 generates a deteriorated image using a model corresponding to the target camera for the generated CG model, that is, a model close to the real world. When a target camera for generating a model is determined, a model corresponding to a lens system of the camera and a model corresponding to a sensor such as a chip installed in the camera may be provided. In addition, a model may consider a deterioration factor based on the distance between the lens system and the imaging surface in the sensor system. Information on this model may also be stored in the storage unit 302.

Parameters corresponding to a plurality of cameras may be set, and in this case, a user can select which camera is a target via the input/output I/F, and the normal model application unit 304 may generate a deteriorated image using the selected model.

After the position and orientation of the camera are set, for example, the normal model application unit 304 may add deterioration in the lens system such as aberration, blur, and stray light in the lens to the CG model, and may further add data such as noise in the sensor. In this manner, when the model is used, a deteriorated image corresponding to the target device is generated. Information necessary for deterioration such as lens system information of the target device and sensor information may be acquired from, for example, specifications, or the device may be actually disassembled, or some patterns may be captured by the device, and deterioration elements may be extracted from the captured images and modeled.

The ideal model application unit 306 transforms the CG model into an image that becomes an ideal type. As in the normal model application unit 304, the ideal model application unit 306 may include an ideal lens model and an ideal sensor model. For example, the ideal model application unit 306 acquires ideal image data from the CG model so that it matches teacher data (label data and data indicating the result) for machine learning.

Examples of normal models and ideal models will be summarized and described below with specific examples.

Fig. 3 is a diagram showing an example of transformation from the CG model into image data by the simulator 3. Fig. 3 shows how the image is transformed in the same steps as in the flowchart.

The CG model shown in the upper left is input to the simulator 3. Based on the CG model, a normal image (deteriorated image) and an ideal image are generated. Here, the normal image in the present disclosure is an image acquired under the same conditions as the image input to the estimation model. In the estimation model, for example, when a normal image is input, optimization in machine learning is performed so that the ideal image is estimated. That is, the ideal image corresponds to a desirable estimated image relative to the normal image.

The normal model application unit 304 transforms the input CG data into image data having the same deterioration as the data input to the estimation model to be trained (S100). As described above, the normal model application unit 304 outputs what kind of imaging result is acquired by the target camera or the like based on parameters of the target camera, the sensor and the like, for the object and the like present in the CG model, according to information on the position and orientation of the camera, and a simulator in which parameters of the lens system and/or the sensor system are set.

On the other hand, the ideal model application unit 306 transforms the input CG model into an image as teacher data used for generating an estimation model to be trained (S102). The processes of S100 and S102 may be performed serially in any order or performed in parallel.

Then, the simulator 3 outputs the image acquired in S100 and S102 to an internal or external memory (S104). When the image is output to an external memory, it is transmitted to the outside via the input/output I/F 300. In addition, it may be output to a machine learning device instead of being output to the memory. In this case, for example, as shown in the area surrounded by the dashed line, output may be performed directly from the simulator 3 to a training target model in which the deteriorated image is an input image and the ideal image is an output image. The process of the dashed line part may be performed by a training device.

Here, as described above, the content of the present disclosure is not limited to generation of a deteriorated image and an ideal image from the CG model. For example, a process in which an ideal image is generated from the CG model (S102) and a deteriorated image is then generated from the generated ideal image (S100') may be performed. The same applies to the following embodiments. In addition, metadata may be generated together with these generated ideal images and deteriorated images. The metadata may be, for example, annotation data indicating what is shown in the image or data indicating the situation, environment and the like in which the image is captured. In this manner, it is also possible to acquire metadata, which is information including at least one of image information, information on the target shown in the image and information about an environment in which the image is captured.

In addition, when the training data generated here (the ideal image and the deteriorated image), and data such as metadata are recorded in a readable storage medium, a storage medium in which these data items are recorded or a device such as an electronic device in which the storage medium is installed may be produced, generated and provided. The storage medium may be a non-volatile memory (non-temporary computer readable medium) such as a magnetic disk, an optical disc, a magneto-optical disc, and a semiconductor memory, or may be a volatile memory such as a static random access memory (SRAM) and a dynamic random access memory (DRAM).

When machine learning of the training target model is performed using these data items output by the simulator 3 and thus the image acquired by the set camera is input, it is possible to generate the estimation model for outputting the ideal image.

As described above, according to the present embodiment, it is possible to generate training data for machine learning by the same method as the method of generating a CG model. When the CG model is used, it is possible to generate a large number of images in situations where collection is generally difficult. In addition, by changing the position of the object in the CG model or changing the object and additionally, changing parameters related to the camera, parameters of the light source and the like and performing re-rendering, it is possible to generate image data (training data) that reproduces various situations.

For example, it is difficult to generate teacher data, which is output data for the estimation model, from the actually captured data, due to various deterioration factors in the captured data, even if the specifications of the device used for capturing are known. According to the present embodiment, it is possible to acquire a deteriorated image which is an input of the estimation model and an ideal image which is an output of the estimation model from the generated CG model, and it is possible to acquire an appropriate training data set.

In addition, since it is possible to arbitrarily set parameters suitable for the device for which the trained model is generated, it is possible to generate training data for estimation models for various devices in the same data generation system 1. For example, even if the original CG model is the same, it is possible to acquire training data corresponding to various devices by changing the deterioration model in the normal model application unit 304 and the ideal model application unit 306. As a result, when one CG model is generated, it is possible to generate training data for various devices and it is possible to reduce the cost of data collection. For example, for a plurality of devices under development with different camera and sensor parameters, it is possible to generate training data from the same CG model.

### (Second embodiment)

In the present embodiment, annotation information is added to the CG model acquired in the same manner as in the above first embodiment. The annotation information is information or meta information used in machine learning training, and is, for example, information indicating object identification, labeling in the image and the like.

Fig. 4 is a diagram showing an example of a configuration of the simulator 3 according to the present embodiment. The simulator 3 further includes an annotation adding unit 308 in addition to the configuration of the simulator 3.

The annotation adding unit 308 adds an annotation to the input CG model. This annotation may be added for each area in the CG data. When CG data is created for each layer, an annotation may be added for each layer.

In the simulator 3, the annotation adding unit 308 adds an annotation to the CG model. Then, the ideal model application unit 306 transforms the CG model to which this annotation is added.

The CG generator 2 may create annotation data together with the CG model. This annotation data may be, for example, data indicating what the area shows for each area in which the object of the CG model is drawn.

Fig. 5 is a diagram showing an example of the created CG model. In the case of Fig. 5, the CG model is acquired as, for example, 3D model data. In the CG model, an object O1 and an object O2 are disposed.

For example, the CG generator 2 generates data including an object O1 and an object O2 as one image. Along with this, the CG generator 2 adds annotation data added at a timing at which the model of the object is generated to the area in which each is present in the image.

For example, this addition may be provided for each pixel. In the case of addition for each pixel, for example, in addition to an RGB channel, a channel showing an object may be prepared and added as 4D data. In this manner, the simulator 3 can embed annotation information in an image file. In addition, when an estimation model for realizing only object recognition is generated, label data in which image data is deleted and only annotation information for pixels or areas is present may be generated.

As another example, instead of increasing the number of channels, a file for annotation different from that of the CG model may be generated, and annotation information of each object for pixels or areas may be maintained in the file for annotation. Then, this annotation information may be used as an input for machine learning.

As another example, the CG generator 2 may generate data including an object O1 and an object O2 as one image having a plurality of layers. Along with this, the CG generator 2 adds annotation data added at a timing at which the model of the object is generated for each layer.

For example, an annotation for the object O1 is added to the layer containing the object O1, and an annotation for the object O2 is added to the layer containing the object O2. This annotation may be provided for each pixel or area of the layer in the same manner as above.

As another example, at a timing at which a layer overlaps 2D original image data, an annotation may be added to image data. As an annotation adding method, the same method as above may be used.

Fig. 6 is a diagram showing an example acquired from the position and orientation of the camera, which is the created CG model. In the case of Fig. 6, the CG model is acquired as 3D model data in the same manner as above. In this CG model, when viewed from the position and orientation of a certain camera, the object O1 and the object O2 hidden behind the object O1 are provided.

When the CG model is generated by the CG generator 2, it is also possible to add an annotation to the hidden object in the camera position and orientation as shown in Fig. 6.

Here, Fig. 6 shows a case in which the entire object O2 is hidden in the object 01, but the present invention is not limited thereto, and for example, the same process can be performed for a case in which a part of the object O2 is hidden in the object O1. In this case, in an area in which the object O1 and the object O2 overlap, an annotation for only the object O1 may be added, and annotations for both the object O1 and the object O2 may be added.

This addition can be appropriately used depending on the model to be trained in machine learning. For example, if it is desired to estimate what is simply shown in the image processing, an annotation of an object closer to an overlapping area may be added. On the other hand, if it is desired to estimate an area or the like of something hidden behind something else, an overlapping annotation may be added in the overlapping area.

Fig. 7 is a diagram showing an example of transformation of a CG model by the simulator 3 according to the present embodiment. As in Fig. 3, Fig. 7 shows how the image is transformed in the same steps as in the flowchart.

The steps other than annotation addition are the same as in Fig. 3 and thus details will be omitted. For example, when there is annotation information called "track" on the track on the right side of the image in the CG model, in the present embodiment, annotation information called "track" is added to an area occupied by the track of the ideal image.

The simulator 3 acquires 2D original image data to which annotation data is added based on the CG model and annotation data output from the CG generator 2 (S106). For example, at a timing at which a 2D image is acquired based on the CG model, annotation data output from the CG generator 2 is embedded for each area or for each pixel, and image data to which annotation information is added is acquired. This acquisition method may be implemented, for example, by increasing the number of channels or adding information in units of pixels as other files as described above.

Then, the image to which the annotation information is added is transformed using an ideal model (S102). In this process, for example, the annotation information is geometrically transformed in the ideal model and executed in the same manner as the object transformation. When the annotation information is subjected to geometric transformation in this manner, the annotation information is added to the area in which each object is present in the ideal image.

For example, if the deteriorated image is a blurred image, annotation information is added in the area of the ideal image with respect to the blurred image. If the deteriorated image is a noise-added image, annotation information is added in the area of the ideal image with respect to the noise-added image. When annotation information is added in this manner, the simulator 3 outputs a set of the deteriorated image and the ideal image to which annotation information is added as training data for machine learning. If the ideal image has a blur, the annotation boundary may be blurred. Blurring of the annotation means that, for example, probability information is added to the annotation information at the boundary, and this probability information may also be used as training data in machine learning.

Here, when annotation information is added to an invisible part as shown in Fig. 6, for example, information on a human hidden behind a block wall at the intersection can be added to the ideal image, and a pathological area that is not visible due to obstacles can be added to the ideal image. By adding in this manner, it is possible to realize training of models that estimate intersection jump out in automated driving, estimate a pathological area in an endoscopic image, and estimate invisible information. As an example, such output applications can be used for machine learning including a hidden Markov model, but can also be appropriately applied to various models, without being limited to the hidden Markov model.

As described above, according to the present embodiment, when the deteriorated image and the ideal image are used as training data as in the above first embodiment, annotation information can be added for the ideal image. Thereby, it is possible to realize generation of training data by machine learning more efficiently.

Fig. 8 is a diagram showing a machine learning system 4 using the data generation system 1 according to the present embodiment. The machine learning system 4 includes the data generation system 1 and a machine learning device 5.

In all the above embodiments, the generation method, generation device, and generation system for training data for machine learning have been described, but the training data generated by these can be used to generate an estimation model. Therefore, the present disclosure also extends to an estimation model, an estimation method, and an estimation device acquired by the machine learning method, the machine learning device 5, or the machine learning system 4 using the training data generated in this manner.

In addition, the machine learning device 5 may include the simulator 3. In this case, when a CG model is input, training data may be generated and machine learning may be performed. In addition, the CG generator 2 may also include the machine learning device 5. In this case, the CG generator 2 generates a CG model, and machine learning can be realized without change.

Hereinafter, some non-limiting examples of ideal images and normal images (deteriorated images) will be exemplified in detail. That is, the data generation method of the present embodiment is not limited to the following implementation, but is more broadly defined as a method having the above configuration. In addition, these examples may be implemented in an appropriate combination.

### (First example)

The normal model and/or the ideal model may be, for example, a model to which blur, distortion, shading, flares, ghosts and the like due to the lens provided in the target device are appropriately added. These parameters may be represented by a lens type, a numerical aperture, a focal length and the like in a plurality of lenses. Since such image transformation is caused by, for example, a point spread function (PSF), coefficients representing various aberrations, a power or the like, if these parameters are adjusted in the simulator 3, the deteriorated image can be acquired from the CG data. In addition, information such as the transmittance of the lens may be used. This transmittance may be defined for each wavelength.

In addition, as another example, it is possible to set the type of the lens such as a fisheye lens, a wide-angle lens, a telephoto lens, a macro lens, and a standard lens. For example, when the normal model application unit 304 uses a fisheye lens model, and the ideal model application unit uses a standard lens model, training data for a model for estimating an image captured by the fisheye lens and an image captured by the standard lens may be generated.

These parameters can be acquired, for example, by an optical simulation or experiment from the lens specifications. In addition, the change in the shape of the object can also be applied to the shape of the annotation. For example, training data for a model in which, in both the normal model application unit 304 and the ideal model application unit 306, a fisheye lens model is used, annotation information is geometrically transformed according to the fisheye lens, and an object in the image captured by the fisheye lens is determined may be generated.

In addition, as another application example, by using the model caused by the lens as described above, training data for an estimation model that focuses on a desired object so that auto focus tracking is realized may be generated.

In addition, as camera setting, transformation using a polarization filter, an IR filter, an ND filter and the like may be performed.

### (Second example)

The normal model and the ideal model may be transformed based on the position and orientation of the camera. When a plurality of cameras are provided, transformation may be performed based on the relative positions of the plurality of cameras. The model for performing such transformation can be defined in the simulator 3 by setting the position and orientation of the camera.

### (Third example)

The normal model and/or the ideal model may perform a transformation of adding sensor noise. The sensor noise is implemented, for example, by optical shot noise, dark current shot noise, random shot noise, pattern noise, pixel value addition or the like. Such noise can be acquired from the specifications of the sensor. With such settings, it is possible to acquire image data in which the relative position and orientation of each object (object) and the camera are set, the position of the object in the image is set, and the relative position and orientation of a plurality of cameras are set.

### (Fourth example)

The normal model and/or the ideal model can be applied to a compressed image (data-compressed image) as well as the device specifications as described above. For example, an image with a compression algorithm, a change in the compression rate, a variable bit rate, gradation-thinning or the like may be generated, and this may be used as a deterioration model. These compressions may be applied, for example, after transformation from the CG model with parameters of the imaging camera. That is, the normal model application unit 304 acquires image data by compressing data acquired by transformation with parameters of the imaging camera.

In addition, in the case of a video, an image in which frames are thinned out may be generated. For example, the normal model may acquire an image set with a smaller frame per second (FPS) than the ideal model. In the video, deterioration due to the compression codec may be provided. For example, the normal model application unit 304 may generate a video according to H264, and the ideal model application unit 306 may generate a video using raw data.

In addition, the normal model application unit 304 may acquire a YUV image, and the ideal model application unit 306 may acquire an RGB image to generate training data for a transformation model of a color space in which YUV is transformed into RGB.

### (Fifth example)

The normal model may be a model that deteriorates in consideration of defects of imaging pixels in the sensor. Pixel defects include white, black, or random value defects, as well as defects of at least one of embedded pixels not used in the image of image plane phase difference acquisition pixels, polarization pixels, IR acquisition pixels, UV acquisition pixels, distance measurement pixels, temperature pixels and the like. The normal model may be a model of such pixel defects.

### (Sixth example)

The normal model may be a model in consideration of characteristics of other sensors. For example, the normal model may be a model that can acquire a deteriorated image in consideration of the color filter characteristics, spectral characteristics, color filter arrangement, temperature characteristics, transformation efficiency, sensitivity (HDR synthesis and gain characteristics), and a read order (rolling shutter distortion) of the sensor.

In addition, the normal model and/or the ideal model may be a model that can acquire an image in consideration of a camera corresponding to a multispectral image, a hyperspectral image or the like. This can be realized by appropriately selecting light source information and camera information (parameters of the combination of the lens and the sensor).

### (Seventh example)

The normal model and/or the ideal model may provide transformation depending on imaging conditions. The imaging conditions are, for example, conditions of lighting, saturation, exposure, and the like.

The lighting conditions indicate, for example, the type of the light source. For example, as described above, if sunlight, tunnel lighting, or a street lamp is set, settings in rendering may be changed on the side of the CG generator 2. In addition, the simulator 3 may acquire images corresponding to various light sources based on normal line information acquired by the CG generator 2 and the like. In addition, not only the type of the light source but also the position of the light source and the direction in which it faces may be set together with the type of the light source.

The saturation is, for example, overexposure, and indicates deterioration in which the maximum value of the color of the pixel value due to reflection from surrounding pixels is exceeded.

The exposure is taken under conditions based on a shutter speed, an aperture and the like, and is a setting of underexposure, overexposure or the like. Here, the saturation of the above pixel value may also be covered under this exposure condition.

In addition, information about the focus of the lens and the like may be set.

### (Eighth example)

Of course, simple geometric transformation may be performed. For example, training data for a model for realizing affine transformation, area extraction and the like may be acquired.

For example, the normal model application unit 304 may transform the image into an affine-transformed image, and the ideal model application unit 306 may acquire an image that is not affine-transformed.

As another example, a model in which the normal model application unit 304 performs transformation of an entire arbitrary image, and the ideal model application unit 306 extracts a character area may be realized. When this training data is used, it is also possible to train a model for extracting a character area from an image.

Hereinafter, specific non-limiting examples of estimation models trained by the data generated by the above examples will be shown.

### (Ninth example)

The data generation system 1 can generate data for estimation model training of performing demosaicing. The normal model application unit 304 generates an image in which pixels are thinned out from the CG data. This generation is implemented, for example, by thinning out each color with a color filter pattern. On the other hand, an image that is not thinned out is generated as an ideal image. When the data generated in this manner is used, it is possible to generate an estimation model for realizing improvement in the resolution of a multicolor sensor.

In addition, for example, an image subjected to a low-pass filter after noise is added may be used as a deteriorated image, and may be used as training data for an estimation model for increasing the resolution to perform transformation into an ideal image.

In addition, the data generation system 1 may generate training data for an estimation model for realizing color reproduction more precisely such as linear matrix and gamma correction.

### (Tenth example)

The data generation system 1 can generate data for estimation model training that corrects pixel defects. The normal model application unit 304 generates an image with defective pixels. This generation is, for example, implemented by changing the defective pixel to an arbitrary value. On the other hand, an image without defective pixels is generated as an ideal image. When the data generated in this manner is used, it is possible to generate an estimation model for realizing estimation by interpolating pixel parts that are not used for image output.

### (Eleventh example)

The data generation system 1 can generate data for estimation model training that corrects an image acquired using a polarization sensor. The normal model application unit 304 generates a polarized image. This image may be generated by acquiring a polarization state when ray tracing is performed by the CG generator 2. Then, the ideal model application unit 306 generates an unpolarized image. When these images are used as training data, it is possible to generate a model for estimating an image in which deterioration due to polarization is minimized.

As another example, the normal model application unit 304 may acquire P-polarized and S-polarized images. In this case, it is possible to generate training data for an estimation model for outputting ideal images from two images, a P polarized image and an S polarized image. In addition, in this case, the positions and orientations of a plurality of cameras that acquire two polarized images may be set.

### (Twelfth example)

The data generation system 1 can generate training data for an estimation model for realizing multi-camera fusion. The normal model application unit 304 acquires images captured by cameras installed at various positions and orientations in the CG model, the ideal model application unit 306 acquires images captured by cameras installed at the positions and orientations at which images are desired to be acquired, and thus training data for this estimation model can be acquired. For each camera, the above various parameters and the like can be set separately. When this training data is used, it is possible to generate training data for an estimation model for acquiring a fused image from images captured by multiple cameras according to various situations.

### (Thirteenth example)

The data generation system 1 may generate training data for a model for estimating images in which deterioration is minimized due to a compression format of various images and videos including the time axis based on the image generation example exemplified in the above fourth example. When such training data is used, for example, it is possible to generate a model for correcting deterioration of image quality due to compression and a model for realizing FHR interpolation such as a model for generating an image in which block noise due to JPEG and MPEG is minimized, and a model for generating a video with a transformed frame rate.

Next, some specific non-limiting examples of annotation information will be exemplified.

### (Fourteenth example)

The annotation adding unit 308 may simply add information of an object shown in the 2D image with a text annotation. This is added for an image, and the annotation adding unit 308 adds annotation information for an image, for example, annotation information "dog" for an image in which a dog is shown and annotation information "cat" for an image in which a cat is shown.

When annotation information is added in this manner, it is possible to generate training data for an estimation model for extracting the names of objects shown in the image.

### (Fifteenth example)

The annotation adding unit 308 may add annotation in a rectangular area in the 2D image. As described above, this may be realized in units of pixels and units of areas, and their boundaries are transformed (for example, affine transformation and projection transformation according to lens distortion) by geometric transformation similar to generation of ideal images. For example, for a picture in which a dog and a cat are shown, the annotation adding unit 308 adds an annotation "dog" in an area in which a dog is shown and adds an annotation "cat" in an area in which a cat is shown.

When annotation information is added in this manner, it is possible to generate training data for an estimation model for identifying what is moving to which area in the image.

### (Sixteenth example)

The annotation adding unit 308 can add the above annotation information using an area of the object of the CG model. When annotation information is added based on the CG model in this manner, it is possible to express overlapping objects when information is transformed from 3D to 2D.

In this case, annotation information items in the overlapping areas can be appropriately processed into training data. As described in the above embodiments, as teacher data, information in the foreground, that is, information shown in the image, may be added as annotation information. As another example, a plurality of information items, for example, both the foreground information and the background information in the area in which objects overlap, may be added as annotation information. In this case, annotation information that can distinguish the foreground and the background may be added. In addition, overlapping may be expressed in the same manner not only for two objects but also for three or more objects. The annotation information added in this manner may be optionally removed during learning and used as training data.

In this manner, when annotation information of what is not shown is added, it is also possible to train an estimation model for predicting risks from what is not shown, for example, a human hidden in block walls as described above.

### (Seventeenth example)

In all the above embodiments, the annotation adding unit 308 can accurately add annotation information to a video. This is because the annotation adding unit 308 can add an annotation to the object of the CG model. This makes it possible to easily add an annotation to a video, which is generally very difficult.

### (Eighteenth example)

In addition to annotations for objects, the annotation adding unit 308 can also add meta information such as lighting conditions, time, camera directions and orientations, lens information, imaging conditions, and camera locations (latitude, longitude, etc.) as annotations to the image generated by the ideal model application unit 306.

### (Nineteenth example)

The annotation adding unit 308 may add an accurate relative position of an object with respect to a camera as an annotation. When an accurate position is added in this manner, it is possible to add an annotation for training data for a position estimation model in a time of flight (ToF) sensor. As another example, a relative position of an object with respect to a camera may be added as an absolute position of the camera in the CG model and an absolute position of the object in the CG model.

### (Twentieth example)

The annotation adding unit 308 may add information on movement such as a speed, acceleration, and angular velocity of an object as an annotation. When a speed of an object or the like is added as an annotation, for example, it can be used for training data for an estimation model for recovering image deterioration due to motion blur or the like.

In addition, information on a speed of an object and the like may be used as training data for an estimation model for recovering rolling shutter distortion.

Hereinafter, applications to which an estimation model trained using the training data generated as described above can be applied will be exemplified as non-limiting examples.

For example, it can be applied to a model for guiding the surroundings with a sound. This is because various objects can be estimated from the acquired images. In addition, it is also possible to estimate a position of an object, and in this case, it can be a model for providing information on what is present at which position.

For example, it can be applied to a model for reading out characters present in the surroundings. This is also for the same reason as above. This may be applied as a model for extracting, translating and outputting characters. Accordingly, for example, it is possible to translate characters in the image captured by the camera into an appropriate language, and output it as sound or character information.

For example, it may be used for remote medical care. This is applied using a model for estimating the patient's complexion and facial expression, determination of an affected area and the like.

For example, it can be applied to a vehicle allocation system. This can be applied by realizing authentication of the user's face by using a model for face recognition. In addition, in the case of a vehicle allocation system according to automated driving, a model for securing the safety of automated driving may be used. For example, without installing an expensive instrument, face authentication and the like can be realized with images acquired by a device such as a general smartphone camera and a drive recorder camera.

For example, it can be applied as a voice assistance. For example, it can be used as a model for acquiring the content of an utterance from the movement of the mouth (a model for realizing lip reading).

For example, it can be applied as a pronunciation practice for a language such as English. As in the above model, determination from the movement of the mouth is possible. In addition, the movement of the throat, the movement of the tongue and the like may be acquired. In this case, it may be generated as a model for inputting not only image data but also sound data.

For example, it can be applied as a model for reading feelings from images or a model for analyzing emotions. This can be realized by associating facial expression, complexion and the like with annotations indicating feelings and emotions.

For example, it can be applied as a camera for selecting a best shot. For example, it is realized by generating training data for learning an estimation model for object recognition, and distance and object movement estimation and the like. In addition, multispectralization may be realized by AI and training of a model that can arbitrarily change lighting conditions may be realized.

For example, it can be applied for palmistry using a camera image. Subtle shapes such as wrinkles on the palm may also be generated by the above system. In this case, training data may be generated in consideration of not only deterioration of the image captured by the camera but also compression of the image when data is transferred.

For example, it can be applied so that a picture book or the like can be referred to from the captured picture. This can be realized by improving the accuracy of object recognition. In the same manner as above, training data may be generated in consideration of image compression during data transfer.

For example, it can be applied so that a brand is acquired from wine label. In this case, as an ideal image, a label that is not placed on a wine bottle may be acquired as a teacher image. In other words, an ideal image can be acquired by separately acquiring model information of various labels before they are placed on a wine bottle in the CG generator 2. In addition, image compression during communication can be taken into account.

For example, it can be applied so that detailed information of a painting is acquired. In museums and the like, lighting conditions are special in many cases, but according to the above embodiments, it is possible to absorb these conditions by lighting conditions applied to the model of the painting.

For example, like general AI, it is possible to generate captions from images or recognize human faces with higher accuracy. For example, in human face recognition, it is possible to simply generate images in which hairstyles are changed, and glasses, accessories, masks and the like are worn from one CG model. Therefore, it is possible to further improve the recognition accuracy.

For example, it can be applied to a ToF sensor. This is because it is possible to accurately set a distance on the CG model.

For example, it can be applied to image retouch. This is because an object can be acquired as the CG model and a desired touch image can be acquired from this object. For example, an actual image can be transformed into an animation-touch picture or transformed into a painting-like image.

For example, it can be applied to realization of image processing in a device under development in which specifications of lenses, sensors and the like are determined. This is because an image can be appropriately acquired based on parameters from the CG model. As a result, for example, in a digital camera, it is possible to install an AI model to be installed in the digital camera at the time of shipment from the factory at the initial stage of product sales without updating the firmware or the like. In this manner, even for devices under development, it is possible to realize optimization of an estimation model ahead of specifications of lenses, sensors and the like.

In the above embodiments, for example, in the example of Fig. 3 and the like, it is assumed that a deteriorated image is generated for an artificially generated ideal image (hereinafter referred to as an artificial image), but an image (processed image) obtained by processing on the artificial image may not be a deteriorated image but an image that is the object of inference. That is, not only a deteriorated image but also a more ideal processed image may be generated for a CG or actually captured image (artificial image). When training is performed with a combination of an artificial image and a processed image, if a deteriorated image is generated, it is possible to generate a model for outputting an ideal image when a deteriorated image is input, and if a more ideal image is generated, it is possible to generate a model for outputting a more ideal image when an artificial image is input.

The model is, for example, a neural network model, and includes a plurality of layers (layer) and a plurality of nodes provided in each of the plurality of layers. The above training may be, for example, a process of training the weight between the nodes. In addition, in the case of CNN or the like, the value itself (including a kernel) of the node in each layer may be used.

Hereinafter, some non-limiting examples of a combination of a processed image and an artificial image by CG and models trained by this combination will be listed. For example, each model can be implemented in an application. A plurality of the following examples can also be combined in an appropriate combination.

When a rolling shutter distortion image is generated, it is possible to generate a model for correcting the rolling shutter distortion image.

When an image captured at a long wavelength is generated, it is possible to generate a model with improved object detection accuracy. For example, an image obtained by a thermal sensor can be inferred from an image having a wavelength invisible to a human eye.

When an image that reflects optical characteristics is generated, it is possible to generate a model for inferring an image in which ghosts and flares are prevented.

When an image of halation of headlights of an oncoming vehicle is generated, it is possible to generate a model for making inferences regarding risk prediction and halation removal.

When an image that reflects an afterimage is generated, it is possible to generate a model for inferring the image from which the afterimage has been removed.

When an image with lens distortion is generated, it is possible to generate a model for inferring an image with corrected distortion.

When an image to which noise is added is generated, it is possible to generate a model for inferring noise reduction.

When an image that reflects rain, fog and the like is generated, it is possible to generate a model for inferring an image with raindrop removal, fog removal and the like, which can be applied to, for example, risk prediction.

When an image that reflects direct sunlight, for example, sunlight from the east in the morning and sunlight from the west in the evening, is generated, it is possible to generate an inference model in which glare, reflection and the like are minimized, which can be applied to risk prediction.

When an image in which various point spread functions (PSF) such as optical system blur and motion blur, and various filters are superimposed is generated, it is possible to generate a model for correcting the resolution.

As one of the above non-limiting examples, when a defocused image is generated, it is possible to generate a model for making an inference to focus on an arbitrary subject.

When a high dynamic range (HDR) image is generated, it is possible to generate a model for inferring an image in which an arbitrary subject is not overexposed or underexposed.

When a high frame rate (HFR) image is generated, it is possible to generate a model for inferring an image in which an arbitrary subject is not blurred.

When a whole-sky image (360-degree all-sky image) is generated, it is possible to generate a model for making an inference such as trimming an arbitrary subject, or conversely, trimming a non-arbitrary subject.

When a parallax image is generated, it is possible to generate a model for inferring depth detection and inferring a depth image.

When a ToF image is generated, it is possible to generate a model for removing distance noise and removing distance error.

When an image captured by designating an aperture value is generated, it is possible to generate a model for inferring an image in which the amount of blurring is different from the designated aperture value.

When an image having unevenness such as image sensor production unevenness is generated, it is possible to generate a model for inferring an image in which unevenness due to production variations is removed.

When an image captured by an old lens is generated, it is possible to generate a model for inferring an image captured by the latest lens.

On the other hand, when an image captured by the latest lens is generated, it is possible to generate a model for inferring an image captured by an old lens.

When raw data is generated, it is possible to generate a model (demosaic model) for inferring an ideal RGB image. In this case, an ideal RGB image may be generated from raw data.

When a multispectral sensor image is generated, it is possible to generate a model that can infer various state amounts, and as a non-limiting example, it is possible to generate a model for estimating the harvest time and growth degree in agriculture.

When images with different light sources are generated, it is possible to generate models for estimating the light sources.

When a toon-rendered image is generated, it is possible to generate a model for transformation into a cartoon or illustration-like drawing.

When images with different weathers and times are generated, it is possible to generate a model for realizing condition-specific inference.

When saturated, underexposed, and ultra-low illuminance images are generated, it is possible to generate models for inferring an HDR image, and inferring saturated and crushed parts.

When a low-resolution image is generated, it is possible to generate a model for inferring a high-resolution image and a super resolution image.

When an image to which moire is added is generated, it is possible to generate a model for inferring moire removal.

When an image in which false colors occur is generated, it is possible to generate a model for correcting false colors.

When images captured by various color filter array (CFA) patterns including multiple spectrums are generated, it is possible to generate a model that can realize an appropriate demosaic process.

When an image including deterioration according to signal processing in the sensor, for example, deterioration in the process of noise removal and demosaic processing, is generated, it is possible to generate a model for inferring an image in which these deteriorations are corrected, for example, to which defect correction or ZAF correction is applied.

When images acquired according to color filter characteristics and elements that have deteriorated over time are generated, it is possible to generate a model for improving color reproducibility.

When images that have been deteriorated by image compression such as JPEG, MPEG, and AVC, and a video compress technology are generated, it is possible to generate a model for restoring the image that has deteriorated due to compression and a model for removing block noise.

When low-frame-rate video information is generated, it is possible to generate a model for realizing frame interpolation.

When images and videos that deteriorate during transmission and have a low bit rate are generated, it is possible to generate a model for inferring an image that restores the deteriorated image.

When an interlaced image is generated, it is possible to generate a model for inferring a progressive image. For example, it is possible to make information such as an old video progressive and it is possible to generate a model that increases the resolution.

When a distance image is generated, it is possible to generate a model for transformation 2D into 3D, a model for generating an image used for virtual reality (VR), a model for face authentication, a model for removing the background or synthesizing the background, and a model for synthesizing 3D data.

When images displayed on various monitors are generated, it is possible to generate a calibration model including a display system such as a display.

For example, it may be an image displayed by a head-up display, and in this case, it is possible to generate a model for generating an image adjusted for distortion correction, easy-to-see colors, and brightness.

When images captured by multiple cameras (including a homo configuration and a hetero configuration) are generated, it is possible to generate a model for generating a synthesized image.

When a panorama image is generated from a plurality of images, it is possible to generate a model for panorama synthesis.

When an image with camera shake is generated, it is possible to generate a model for inference with camera shake correction.

When an underexposed or overexposed image is generated, it is possible to generate a model for correction for proper exposure.

When an image with a blur of a moving object is generated, it is possible to generate a model for inferring a blur-corrected image.

When an image obtained by extracting arbitrary features in a color space such as a black and white image, a luminance image, a saturation image, and a hue image is generated, it is possible to generate a model for appropriately transforming these images into a color image. This can be applied to a model for extracting and recognizing an object or the like from an image or the like captured under specific conditions.

When a faded image or a sepia image is generated, it is possible to generate a model for restoring colors. For example, it may be a model for inference from wavelengths other than RGB.

When an image with the same phase of 3ch is generated, it is possible to generate a model for synthesizing pixel shifts or removing artifacts.

When an image in which there is a mistake in the direction of a lighting is generated, it is possible to generate a model for inferring an image with appropriate lighting.

When an image that reflects the difference in the appearance of colors due to color vision is generated, it is possible to generate a model for inferring an image that has been transformed into an easy-to-see color.

When an image in which flicker occurs is generated, it is possible to generate a model for inferring an image in which flicker is corrected.

When images with different viewpoints are generated, it is possible to generate a model for inferring an image with a transformed viewpoint.

### (Summary)

Each of the above embodiments can be used for a series of processes of image generation for learning model generation, metadata generation related to the images, and learning model generation as described below. In addition, the scope of the present disclosure also extends to inference using the learning model generated in this manner.

### (a) Data generation for machine learning

In a data generator for generating data (for example, a data generation device that realizes the above generation method), a target data set of a high quality image and a low quality image is generated by adding characteristics (physical model) of an arbitrary camera. Combinations of a high quality image and a low quality image may be, as shown above, for example, high-resolution and low-resolution images, bright (daytime, outdoor) and dark (nighttime, indoor) images, and images in a general optical system and a wide-angle optical system.

### (b) Model generation by machine learning

When the model is trained by various machine learning methods, a model for detecting a target using the low quality image may be generated, and a model for inferring a high quality image from a low quality image may be generated. In addition, these can be combined. As a non-limiting example, using training in which the face is detected from the image captured at night and training in which a face image captured during daytime is inferred from a face image captured at night, it is possible to train an inference model that extracts and generates face images captured during daytime from images captured at night.

### (c) Application generation using model

It is possible to construct an application for tracking a target using a model for inferring the above high quality target image. For example, it is possible to construct an application for tracking a specific person using a model for inferring a person image. According to the model generated as described above, a face is extracted from a low quality image captured by an arbitrary camera, the face is transformed into a high quality image, and thus it is possible to track an arbitrary human. For example, it is possible to search for lost children in a predetermined area from a face image, estimate whereabouts of criminals from information such as a surveillance camera by reading faces of criminals, and conduct traffic diagram research. Of course, it can be applied not only for humans but also tracking traffic violation vehicles, searching for stolen bicycles and pets, and animal ecosystem surveys. In addition, it can also be applied for non-moving objects, for example, searching for buildings and places.

### (d) Distribution of application

The above applications can also be distributed and deployed. For example, when an application that extracts a face from a video captured by a camera together with a human face is distributed, it is possible to get users in a wide area to use the application. This application may be in a form in which inference is performed by acquiring a video using a camera such as a user's smartphone or the like or may be in a form in which a user inputs an arbitrary video to this application. When the application is used in this manner, it is possible to easily track lost children and criminals. The same applies to other applications, and it is possible to realize various estimations using a video captured by an arbitrary user. In addition, such an application may be deployed on a surveillance camera, an arbitrary fixed or movable camera, or a peripheral device connected to these cameras.

### (e) Use of application

When the application distributed and deployed as described above is used, target tracking, inference and the like can be performed with high accuracy. Since the model can be customized by the physical model based on the environment in which the deployed application is used, tracking and the like can be realized without decreasing the accuracy. For example, in a camera installed in a certain smartphone, a model that can infer an ideal image during daytime generated by CG from an image-processed image at night used in the smartphone can be generated, applications that use this model can be deployed to various cameras and the like, and when the application is used using this camera or the like, it is possible to greatly increase the area of tracking and the like, and also to secure inference with high accuracy. Here, a model suitable for high quality and low quality imaging data during daytime and at night may be generated, and these models may be deployed. For example, if an owner of the smartphone on the side using the application allows use of the camera and the communication band, imaging information may be analyzed in the smartphone, or the video acquired by the smartphone may be transmitted to the server by communication. The application may output position information together. The position information may be acquired using, for example, a global positioning system (GPS), Wi-Fi (registered trademark) information, or base station information. These functions may have a form in which the function is turned on by opt-in in order to secure the security of the owner who owns the smartphone. In addition, instead of a dedicated application, for example, an add-on to an arbitrary application may be used to analyze a video, an image and the like captured by the arbitrary application by opt-in of the owner of the smartphone in the same manner as above.

### (f) Communication with application

For example, a server or the like may be in a form that allows communication from the deployed application. When information from the application deployed in the server is aggregated in this manner, it is possible to collect human position information and information about the detection time and the like. With this information, it is possible to acquire position information for each time, and it is possible to improve tracking performance. In addition, as metadata, a clothing color, height, sex, facial expression and the like of a human may be communicated from the side of the application. A user can add metadata. The server may re-generate the image based on the metadata, update the model, and apply (redeploy) it to the application. In addition, for example, a user such as a police officer can access the server or information may be provided to a user who has requested tracking.

### (g) Transmission of target image

In addition, an application may send face image data acquired by a sensor such as a camera. For example, if a video captured at night with a smartphone camera is processed by the application, the processing power may not be sufficient due to the amount of data. In such a case, the video itself may be transmitted to the server. This transmission may be performed in real time, or the video may be stored once as a file and then transmitted at a timing at which there is a margin in the bandwidth. For example, transmission may be performed when a Wi-Fi connection is established.

### (h) Output and display of target information

The server may collect information from the deployed application or output time, position information and the like in an easy-to-understood format based on information inferred or re-inferred from the collected information. For example, the server may display target time and position information in an easy-to-understood format on the map and output it to the tracking requester. In addition, in the case of real time processing, the server may output information about the position of a tracking target to the requester in real time by a push notification or the like. The information about the position may be an address or may indicate a predetermined area, a point, or the like on the map.

### (i) Update of model

As described above, the server may update the model at an arbitrary timing. For example, when information is aggregated from the application, data to be trained is accumulated. When the model is updated using the accumulated data, it is possible to improve the accuracy of inference by the model. In addition, the accumulated data may be processed by the method shown in the above embodiment, for example, a low-resolution image is generated from a high-resolution image, and a set of this generated images may be used to update the model.

As described in (i), in the above embodiment, not only the model using CG may be deteriorated to acquire a low quality image, but also the actually captured image may be deteriorated and used to train the model.

Aspects of the present disclosure may be implemented via a program. The program may be stored in a storage unit, and more specifically, information processing by software may be realized by hardware. Software processing is executed in processors such as a central processing unit (CPU) and a graphics processing unit (GPU) and may also be implemented in various analog circuits or digital circuits, for example, a field programmable gate array (FPGA), an application specific integrated circuit (ASIC), and a digital signal processor (DSP).

### <Application example using AI>

In the configuration to which the technology according to the present disclosure (the present technology) is applied, artificial intelligence (AI) such as machine learning can be used. Fig. 9 shows a configuration example of a system including a device that performs an AI process.

An electronic device 20001 is a mobile terminal such as a smartphone, a tablet terminal, and a mobile phone. The electronic device 20001 has a sensor 20011 (for example, an optical sensor) to which the technology according to the present disclosure is applied. The optical sensor is a sensor (image sensor) that transforms light into an electrical signal. The electronic device 20001 can be connected to a base station 20020 installed at a predetermined location by wireless communication corresponding to a predetermined communication method, and thus can be connected to a network 20040 such as the Internet via a core network 20030.

An edge server 20002 for realizing mobile edge computing (MEC) is provided at a position closer to a mobile terminal between the base station 20020 and the core network 20030. A cloud server 20003 is connected to the network 20040. The edge server 20002 and the cloud server 20003 can perform various processes according to the application. Here, the edge server 20002 may be provided in the core network 20030.

The AI process is performed by the electronic device 20001, the edge server 20002, the cloud server 20003, or the sensor (for example optical sensor) 20011. The AI process processes the technology according to the present disclosure using AI such as machine learning. The AI process includes a learning process and an inference process. The learning process is a process of generating a learning model. In addition, the learning process also includes a relearning process to be described below. The inference process is a process for performing inference using a learning model. Hereinafter, regarding the process related to the technology according to the present disclosure, a process without using AI will be referred to as a normal process, which is distinguished from the AI process.

In the electronic device 20001, the edge server 20002, the cloud server 20003, or the sensor 20011/the optical sensor 20011, the AI process is realized by executing a program by a processor such as a central processing unit (CPU) or using a dedicated hardware such as a processor specialized for a specific application. For example, a graphics processing unit (GPU) can be used as a processor specialized for a specific application.

Fig. 10 shows a configuration example of the electronic device 20001. The electronic device 20001 includes a CPU 20101 that controls operations of respective units and performs various processes, a GPU 20102 specialized for image processing and parallel processing, a main memory 20103 such as a dynamic random access memory (DRAM), and an auxiliary memory 20104 such as a flash memory.

The auxiliary memory 20104 records programs for the AI process and data such as various parameters. The CPU 20101 loads programs and parameters recorded in the auxiliary memory 20104 into the main memory 20103 and executes the programs. Alternatively, the CPU 20101 and the GPU 20102 load programs and parameters recorded in the auxiliary memory 20104 into the main memory 20103 and execute the programs. Thereby, the GPU 20102 can be used as a general-purpose computing on graphics processing units (GPGPU).

Here, the CPU 20101 and the GPU 20102 may be configured as a system on a chip (SoC). When the CPU 20101 executes a program for the AI process, the GPU 20102 may not be provided.

The electronic device 20001 also includes the sensor 20011/the optical sensor 20011 to which the technology according to the present disclosure is applied, an operation unit 20105 such as a physical button and a touch panel, a sensor microphone 20106 which includes at least one sensor and collects sound, a display 20107 that displays information such as images and text, a speaker 20108 that outputs sound, a communication I/F 20109 such as a communication module corresponding to a predetermined communication method, and a bus 20110 that connects these components.

A sensor 20106 includes at least one of various sensors such as an optical sensor (image sensor), a sound sensor (microphone), a vibration sensor, an acceleration sensor, an angular velocity sensor, a pressure sensor, an odor sensor, and a biosensor. In the AI process, data acquired from at least one sensor of the sensor 20106 can be used together with the image data acquired from the optical sensor 20011. In this manner, the data obtained from various types of sensors can be used together with the image data, and thus it is possible to realize the AI process suitable for various situations according to the multimodal AI technology.

Here, data obtained by integrated processing of image data acquired from two or more optical sensors according to the sensor fusion technology may be used in the AI process. Two or more optical sensors may be a combination of the optical sensor 20011 and the optical sensor in the sensor 20106 or a plurality of optical sensors may be provided in the optical sensor 20011. For example, the optical sensor includes an RGB visible optical sensor, a distance measurement sensor using time of flight (ToF) or the like, a polarization sensor, an event-based sensor, a sensor for acquiring IR images, a sensor that can acquire multiple wavelengths and the like.

In the electronic device 20001, the AI process can be performed by a processor such as the CPU 20101 or the GPU 20102. When the processor of the electronic device 20001 performs the inference process, since the process can start without requiring time after image data is acquired by the sensor 20011/the optical sensor 20011, the process can be performed at a high speed. Therefore, in the electronic device 20001, when the inference process is used for an application such as an application that requires real time transmission of information with a short delay time, the user can perform operations without discomfort due to delay. In addition, when the processor of the electronic device 20001 performs the AI process, compared to when the server such as the cloud server 20003 is used, it is not necessary to use a communication line or a computer device for the server, and it is possible to realize the process at low cost.

Fig. 11 shows a configuration example of the edge server 20002. The edge server 20002 includes a CPU 20201 that controls operations of respective units and performs various processes, and a GPU 20202 specialized for image processing and parallel processing. The edge server 20002 further includes a main memory 20203 such as a DRAM, an auxiliary memory 20204 such as a hard disk drive (HDD) and a solid state drive (SSD), and a communication I/F 20205 such as a network interface card (NIC), which are connected to a bus 20206.

The auxiliary memory 20204 records programs for the AI process and data such as various parameters. The CPU 20201 loads programs and parameters recorded in the auxiliary memory 20204 into the main memory 20203 and executes the programs. Alternatively, the CPU 20201 and the GPU 20202 load programs and parameters recorded in the auxiliary memory 20204 into the main memory 20203 and execute the programs, and thus the GPU 20202 can be used as a GPGPU. Here, when the CPU 20201 executes a program for the AI process, the GPU 20202 may not be provided.

In the edge server 20002, the AI process can be performed by a processor such as the CPU 20201 or the GPU 20202. When the processor of the edge server 20002 performs the AI process, since the edge server 20002 is provided at a position closer to the electronic device 20001 than the cloud server 20003, it is possible to reduce the processing delay. In addition, since the edge server 20002 has a higher processing capacity such as a calculation speed than the electronic device 20001 and the sensor 20011/the optical sensor 20011, it can be configured for general purposes. Therefore, when the processor of the edge server 20002 performs the AI process, the AI process can be performed if data can be received regardless of the differences in specifications and performances of the electronic device 20001 and the sensor 20011/the optical sensor 20011. When the AI process is performed by the edge server 20002, it is possible to reduce the processing load on the electronic device 20001 and the sensor 20011/the optical sensor 20011.

Since the configuration of the cloud server 20003 is the same as the configuration of the edge server 20002, the description thereof will be omitted.

In the cloud server 20003, the AI process can be performed by a processor such as the CPU 20201 and the GPU 20202. Since the cloud server 20003 has a higher processing capacity such as a calculation speed than the electronic device 20001 and the sensor 20011/the optical sensor 20011, it can be configured for general purposes. Therefore, when the processor of the cloud server 20003 performs the AI process, the AI process can be performed regardless of the differences in specifications and performances of the electronic device 20001 and the sensor 20011/the optical sensor 20011. In addition, if it is difficult for the processor of the electronic device 20001 or the sensor 20011/the optical sensor 20011 to perform the high-load AI process, the processor of the cloud server 20003 performs the high-load AI process, and the processing result can be fed-back to the processor of the electronic device 20001 or the sensor 20011/the optical sensor 20011.

Fig. 12 shows a configuration example of the sensor 20011/the optical sensor 20011. The sensor 20011/the optical sensor 20011 can be configured as, for example, a one-chip semiconductor device having a laminated structure in which a plurality of substrates are laminated. The sensor 20011/the optical sensor 20011 has a configuration in which two substrates, a substrate 20301 and a substrate 20302 are laminated. Here, the configuration of the optical sensor 20011 is not limited to the laminated structure, and for example, the substrate including an imaging unit may include a processor that performs the AI process such as a CPU and a digital signal processor (DSP).

An imaging unit 20321 in which a plurality of pixels are arranged two-dimensionally is installed in the upper substrate 20301. In the lower substrate 20302, an imaging processing unit 20322 that performs a process related to image capturing by the imaging unit 20321, an output I/F 20323 that outputs the captured image and signal processing results to the outside, an imaging control unit 20324 that controls image capturing by the imaging unit 20321, a CPU 20331 and a communication I/F 20334 are installed. An imaging block 20311 includes the imaging unit 20321, the imaging processing unit 20322, the output I/F 20323, and the imaging control unit 20324.

In addition, in the lower substrate 20302, the CPU 20331 that controls respective units and performs various processes, a DSP 20332 that performs signal processing using the captured image, information from the outside and the like, a memory 20333 such as a static random access memory (SRAM) and a dynamic random access memory (DRAM), and the communication I/F 20334 that exchanges necessary information with the outside are installed. A signal processing block 20312 includes the CPU 20331, the DSP 20332, the memory 20333, and the communication I/F 20334. The AI process can be performed by at least one processor of the CPU 20331 and the DSP 20332.

In this manner, the signal processing block 20312 for the AI process can be installed in the lower substrate 20302 in the laminated structure in which a plurality of substrates are laminated. Thereby, since the image data acquired by the imaging block 20311 for imaging installed in the upper substrate 20301 is processed by the signal processing block 20312 for the AI process installed in the lower substrate 20302, a series of processes can be performed in a one-chip semiconductor device.

In the sensor 20011/the optical sensor 20011, the AI process can be performed by a processor such as the CPU 20331. When the processor of the sensor 20011/the optical sensor 20011 performs the AI process such as the inference process, since a series of processes are performed in a one-chip semiconductor device, it is possible to improve information confidentiality because information does not leak to the outside of the sensor. In addition, since it is not necessary to transmit data such as image data to another device, the processor of the sensor 2001 1/the optical sensor 20011 can perform the AI process such as the inference process using image data at a high speed. For example, when the inference process is used for an application such as an application that requires real time performance, it is possible to sufficiently secure real time performance. Here, securing real time performance means that information can be transmitted with a short delay time. In addition, when the processor of the sensor 20011/the optical sensor 20011 performs the AI process, the processor of the electronic device 20001 transmits various metadata items, and thus the processing can be reduced and power consumption can be reduced.

Fig. 13 shows a configuration example of a processing unit 20401. When the processor of the electronic device 20001, the edge server 20002, the cloud server 20003, or the sensor 20011/the optical sensor 20011 executes various processes according to the program, it functions as the processing unit 20401. Here, a plurality of processors of the same or different devices may function as the processing unit 20401.

The processing unit 20401 includes an AI processing unit 20411. The AI processing unit 20411 performs the AI process. The AI processing unit 20411 includes a learning unit 20421 and an inference unit 20422.

The learning unit 20421 performs a learning process of generating a learning model. In the learning process, a machine-learned learning model that has been machine-learned to correct correction target pixels included in the image data is generated. In addition, the learning unit 20421 may perform a relearning process for updating the generated learning model. In the following description, the generation and update of the learning model will be described separately, but since it can be said that the learning model is generated by updating the learning model, it is assumed that the generation of the learning model includes the meaning of updating the learning model.

Here, the learning unit 20421 corresponds to the machine learning device 5 provided in examples of the present invention. In addition, when learning is performed by the learning unit 20421, the CG generator 2 and the simulator 3 of the present invention can be applied, and training data (teacher images and deteriorated images) generated by the CG generator 2 and the simulator 3 can be used.

Each of the CG generator 2 and the simulator 3 may be provided in the learning unit 20421, or may be provided in the electronic device 20001, the edge server 20002, the cloud server 20003, or the sensor (for example, the optical sensor) 20011.

In addition, the generated learning model is recorded in a storage medium such as a main memory or an auxiliary memory provided in the electronic device 20001, the edge server 20002, the cloud server 20003, or the optical sensor 20011, and thus it can be newly used in the inference process that the inference unit 20422 performs. Thereby, it is possible to generate the electronic device 20001, the edge server 20002, the cloud server 20003, or the optical sensor 20011 that performs the inference process based on the learning model. In addition, the generated learning model may be recorded in a storage medium or an electronic device independent of the electronic device 20001, the edge server 20002, the cloud server 20003, or the optical sensor 20011, and provided for use in other devices. Here, the generation of these electronic device 20001, edge server 20002, cloud server 20003, and optical sensor 20011 includes not only recording a new learning model in storage mediums thereof during production but also updating the already recorded generated learning model.

The inference unit 20422 performs the inference process using the learning model. In the inference process, for example, a process for correcting correction target pixels included in the image data is performed using the learning model. The correction target pixels are pixels to be corrected that satisfy predetermined conditions among a plurality of pixels in the image corresponding to the image data.

Hereinafter, the inference process will be described mainly as an example of a process for correcting correction target pixels included in the image data, but the inference process is not limited to the process for correcting correction target pixels, and may be various inference process as described above.

As a machine learning method, a neural network, deep learning or the like can be used. A neural network is a model that imitates a human brain neural circuit, and is composed of three types of layers: an input layer, an intermediate layer (hidden layer), and an output layer. The deep learning is a model that uses a neural network having a multi-layer structure, and it is possible to repeat characteristic learning in each layer and learn complex patterns hidden in a large amount of data.

Supervised learning can be used as a machine learning problem set. For example, in the supervised learning, features are learned based on provided labeled teacher data. Thereby, it is possible to derive labels for unknown data. As the teacher data, image data actually acquired by the optical sensor, acquired image data that is aggregated and managed, a data set generated by the simulator and the like can be used.

Here, without limitation to supervised learning, unsupervised learning, semi-supervised learning, reinforcement learning and the like may be used. In the unsupervised learning, a large amount of unlabeled learning data is analyzed to extract features, and clustering and the like are performed based on the extracted features. Thereby, it is possible to analyze and predict trends based on a huge amount of unknown data. The semi-supervised learning is a combination of supervised learning and unsupervised learning, and is a method in which, after learning features by supervised learning, a huge amount of teacher data is provided in unsupervised learning, and learning is repeated while features are automatically calculated. The reinforcement learning deals with a problem of observing the current state of an agent in a certain environment and determining an action to be taken.

In this manner, when the processor of the electronic device 20001, the edge server 20002, the cloud server 20003, or the sensor 20011/the optical sensor 20011 functions as the AI processing unit 20411, the AI process is performed by one or more of these devices.

The AI processing unit 20411 may include at least one of the learning unit 20421 and the inference unit 20422. That is, the processor of each device may execute one of the learning process and the inference process as well as both the learning process and the inference process. For example, when the processor of the electronic device 20001 performs both the inference process and the learning process, the learning unit 20421 and the inference unit 20422 may be provided, and when only the inference process is performed, only the inference unit 20422 may be provided.

The processor of each device may execute all processes related to the learning process or the inference process, or after some processes are executed by the processor of each device, the remaining processes may be executed by the processor of other devices. In addition, each device may have a common processor for executing each function of the AI process such as the learning process and the inference process, or may have a processor individually for each function.

Here, the AI process may be performed by a device other than the above devices. For example, the AI process can be performed by another electronic device to which the electronic device 20001 can be connected by wireless communication or the like. Specifically, when the electronic device 20001 is a smartphone, other electronic devices that perform the AI process may be devices such as other smartphones, tablet terminals, mobile phones, personal computers (PC), game consoles, TV receivers, wearable terminals, digital still cameras, and digital video cameras.

In addition, in the configuration using sensors installed in a moving component such as an automobile and sensors used in telemedical devices, the AI process such as the inference process can be applied, but a short delay time is required in the environment. In such an environment, the delay time can be shortened by performing the AI process in a processor of a local-side device (for example, the electronic device 20001 as an in-vehicle device or a medical device) instead of performing the AI process in the processor of the cloud server 20003 via the network 20040. In addition, even when there is no environment for connection to the network 20040 such as the Internet or when a device is used in an environment in which a high-speed connection cannot be established, for example, if the AI process is performed by the processor of the local-side device such as the electronic device 20001 or the optical sensor 20011, the AI process can be performed in a more appropriate environment.

Here, the above configuration is an example, and other configurations may be used. For example, the electronic device 20001 is not limited to a mobile terminal such as a smartphone, and may be an electronic device such as a PC, a game console, a TV receiver, a wearable terminal, a digital still camera, and a digital video camera, an in-vehicle device, or a medical device. In addition, the electronic device 20001 may be connected to the network 20040 by wireless communication or wired communication corresponding to a predetermined communication method such as a wireless LAN (Local Area Network) or a wired LAN. The sensor 20011 is not limited to a configuration having a laminated structure in which a plurality of substrates are laminated, and other configurations may be used. For the AI process, a quantum computer, a neuromorphic computer or the like may be used without limitation to a processor such as a CPU and a GPU of each device.

### (Flow of process)

A flow of a process using AI will be described with reference to the flowchart of Fig. 14.

In Step S20001, the processing unit 20401 acquires image data from the sensor 20011/the optical sensor 20011. In Step S20002, the processing unit 20401 performs a correction process on the acquired image data. In the correction process, the inference process using a learning model is performed on at least a part of the image data, and corrected data which is the data after correcting correction target pixels included in the image data is obtained. In Step S20003, the processing unit 20401 outputs the corrected data obtained in the correction process.

Here, the correction process in the above Step S20002 will be described in detail with reference to the flowchart of Fig. 15.

In Step S20021, the processing unit 20401 detects correction target pixels included in the image data. In the step of detecting the correction target pixels (hereinafter referred to as a detection step), the inference process or the normal process is performed.

When the inference process is performed as the detection step, the inference unit 20422 inputs image data to the learning model, outputs information for detecting correction target pixels included in the input image data (hereinafter referred to as detection information), and thus can detect correction target pixels. Here, a learning model in which image data including correction target pixels is an input and detection information of correction target pixels included in the image data is an output is used. On the other hand, when the normal process is performed as the detection step, the processor or signal processing circuit of the electronic device 20001 or the sensor 20011/the optical sensor 20011 performs a process of detecting correction target pixels included in the image data without using AI.

In Step S20021, when correction target pixels included in the image data are detected, the process advances to Step S20022. In Step S20022, the processing unit 20401 corrects the detected correction target pixels. In the step of correcting the correction target pixels (hereinafter referred to as a correction step), the inference process or the normal process is performed.

When the inference process is performed as the correction step, the inference unit 20422 inputs image data and detection information of correction target pixels to the learning model, outputs the corrected image data or detection information of correction target pixels that have been corrected, and thus can correct the correction target pixels. Here, a learning model in which image data including correction target pixels and detection information of correction target pixels are inputs, and the corrected image data or detection information of correction target pixels that have been corrected are outputs is used. On the other hand, when the normal process is performed as the correction step, the processor or signal processing circuit of the electronic device 20001 or the sensor 20011/the optical sensor 20011 performs a process of correcting correction target pixels included in the image data without using AI.

In this manner, in the correction process, the inference process or the normal process is performed in the detection step of detecting correction target pixels, the inference process or the normal process is performed in the correction step of correcting the detected correction target pixels, and thus the inference process is performed in at least one step of the detection step and the correction step. That is, in the correction process, the inference process using a learning model is performed on at least a part of image data from the sensor 20011/the optical sensor 20011.

In addition, in the correction process, when the inference process is used, the detection step may be performed integrally with the correction step. When the inference process is performed as such a correction step, the inference unit 20422 inputs image data to the learning model, outputs image data in which the correction target pixels are corrected, and thus can correct the correction target pixels included in the input image data. Here, a learning model in which image data including correction target pixels is an input and image data in which the correction target pixels are corrected is an output is used.

Here, the processing unit 20401 may generate metadata using the corrected data. The flowchart of Fig. 16 shows a flow of a process when metadata is generated.

In Steps S20051 and S20052, as in the above Steps S20001 and S20002, image data is acquired, and the correction process is performed using the acquired image data. In Step S20053, the processing unit 20401 generates metadata using the corrected data obtained in the correction process. In the step of generating the metadata (hereinafter referred to as a generation step), the inference process or the normal process is performed.

When the inference process is performed as the generation step, the inference unit 20422 inputs corrected data to the learning model and outputs metadata related to the input corrected data, and thus can generate metadata. Here, a learning model in which corrected data is an input and metadata is an output is used. For example, the metadata includes 3D data such as a point cloud and a data structure. Here, the processes of Steps S20051 to S20054 may be performed by end-to-end machine learning. On the other hand, when the normal process is performed as the generation step, the processor or signal processing circuit of the electronic device 20001 or the sensor 20011/the optical sensor 20011 performs a process of generating metadata from the corrected data without using AI.

As described above, in the electronic device 20001, the edge server 20002, the cloud server 20003, or the sensor 20011/the optical sensor 20011, as the correction process using image data from the sensor 20011/the optical sensor 20011, a detection step of detecting correction target pixels, a correction step of correcting correction target pixels, or a correction step of correcting correction target pixels included in the image data is performed. In addition, in the electronic device 20001, the edge server 20002, the cloud server 20003, or the sensor 20011/the optical sensor 20011, a generation step of generating metadata using the corrected data obtained in the correction process can be performed.

In addition, when this data such as corrected data or metadata is recorded in a readable storage medium, it is possible to generate a storage medium in which these data items are recorded and a device such as an electronic device in which the storage medium is installed. The storage medium may be a storage medium such as a main memory or an auxiliary memory provided in the electronic device 20001, the edge server 20002, the cloud server 20003, or the optical sensor 20011, or may be a storage medium or an electronic device independent of them.

When the detection step and the correction step are performed in the correction process, the inference process using a learning model can be performed in at least one step of the detection step, the correction step, and the generation step. Specifically, after the inference process or the normal process is performed in the detection step, the inference process or the normal process is performed in the correction step, and additionally, the inference process or the normal process is performed in the generation step, and thus the inference process is performed in at least one step.

In addition, when only the correction step is performed in the correction process, the inference process can be performed in the correction step, and the inference process or the normal process can be performed in the generation step. Specifically, after the inference process is performed in the correction step, the inference process or the normal process is performed in the generation step, and thus the inference process is performed in at least one step.

In this manner, in the detection step, the correction step, and the generation step, the inference process may be performed in all steps, or the inference process may be performed in some steps, and the normal process may be performed in the remaining steps. Hereinafter, a process when the inference process is performed in each step will be described.

### (A) Process when inference process is performed in detection step

When a detection step and a correction step are performed in the correction process, if the inference process is performed in the detection step, in the inference unit 20422, a learning model in which image data including correction target pixels is an input and detection information of correction target pixels included in the image data is an output is used. This learning model is generated in the learning process performed by the learning unit 20421, and is provided to the inference unit 20422 and used when the inference process is performed.

When a detection step and a correction step are performed in the correction process with reference to the flowchart of Fig. 17, the flow of the learning process performed in advance when the inference process is performed in the detection step will be described as follows. That is, the learning unit 20421 acquires image data actually acquired by the optical sensor, acquired image data that is aggregated and managed, a data set generated by the simulator and the like as teacher data (S20061), and generates a learning model using the acquired teacher data (S20062). As this learning model, a learning model in which image data including correction target pixels is an input and detection information of correction target pixels included in the image data is an output is generated, and is output to the inference unit 20422 (S20063).

### (B) Process when inference process is performed in correction step

When a detection step and a correction step are performed in the correction process, if the inference process is performed in the correction step, in the inference unit 20422, a learning model in which image data including correction target pixels and detection information of correction target pixels are inputs, and the corrected image data or detection information of correction target pixels that have been corrected are outputs is used. This learning model is generated in the learning process performed by the learning unit 20421.

When a detection step and a correction step are performed in the correction process with reference to the flowchart of Fig. 17, a flow of the learning process performed in advance when the inference process is performed in the correction step will be described as follows. That is, the learning unit 20421 acquires image data from the optical sensor, a data set generated by the simulator and the like as teacher data (S20061), and generates a learning model using the acquired teacher data (S20062). As this learning model, a learning model in which image data including correction target pixels and detection information of correction target pixels are inputs, and the corrected image data or detection information of correction target pixels that have been corrected are outputs is generated and output to the inference unit 20422 (S20063).

### (C) Process when inference process is performed in correction step

When only a correction step is performed in the correction process, if the inference process is performed in the correction step, in the inference unit 20422, a learning model in which image data including correction target pixels is an input and image data in which the correction target pixels are corrected is an output is used. This learning model is generated in the learning process performed by the learning unit 20421.

When only a correction step is performed in the correction process with reference to the flowchart of Fig. 17, a flow of the learning process performed in advance when the inference process is performed in the correction step will be described as follows. That is, the learning unit 20421 acquires image data from the optical sensor, a data set generated by the simulator and the like as teacher data (S20061), and generates a learning model using the acquired teacher data (S20062). As this learning model, a learning model in which image data including correction target pixels is an input and image data in which the correction target pixels are corrected is an output is generated, and output to the inference unit 20422 (S20063).

Here, data such as a learning model, image data, and corrected data may be used not only in a single device but also exchanged between a plurality of devices, and used in these devices. Fig. 18 shows a flow of data between a plurality of devices.

Electronic devices 20001-1 to 20001-N (N is an integer of 1 or more) are possessed by each user, and can be connected to the network 20040 such as the Internet via a base station (not shown) or the like. During production, a learning device 20501 is connected to the electronic device 20001-1, and the learning model provided by the learning device 20501 can be recorded in the auxiliary memory 20104. The learning device 20501 generates a learning model using the data set generated by a simulator 20502 as teacher data and provides it to the electronic device 20001-1. Here, the teacher data is not limited to the data set provided from the simulator 20502, and image data actually acquired by the optical sensor, acquired image data that is aggregated and managed and the like may be used.

Although not shown, like the electronic device 20001-1, for the electronic devices 20001-2 to 20001-N, the learning model can be recorded at the production stage. Hereinafter, when it is not necessary to distinguish the electronic devices 20001-1 to 20001-N from each other, they will be referred to as the electronic device 20001.

In addition to the electronic device 20001, a learning model generation server 20503, a learning model provision server 20504, a data provision server 20505, and an application server 20506 are connected to the network 20040, and data can be exchanged with each other. Each server can be provided as a cloud server.

The learning model generation server 20503 has the configuration as the cloud server 20003, and can perform the learning process by a processor such as a CPU. The learning model generation server 20503 generates a learning model using teacher data. Although a case in which the electronic device 20001 records the learning model during production is exemplified in the illustrated configuration, the learning model may be provided from the learning model generation server 20503. The learning model generation server 20503 transmits the generated learning model to the electronic device 20001 via the network 20040. The electronic device 20001 receives the learning model transmitted from the learning model generation server 20503 and records it in the auxiliary memory 20104. Thereby, the electronic device 20001 having the learning model is generated.

That is, in the electronic device 20001, when the learning model is not recorded at the production stage, the learning model from the learning model generation server 20503 is newly recorded, and thus the electronic device 20001 in which a new learning model is recorded is generated. In addition, in the electronic device 20001, when the learning model has already been recorded at the production stage, the recorded learning model is updated to the learning model from the learning model generation server 20503, and thus the electronic device 20001 in which the updated learning model is recorded is generated. In the electronic device 20001, the inference process can be performed using a learning model that is appropriately updated.

The learning model is not limited to a model directly provided from the learning model generation server 20503 to the electronic device 20001, but the learning model provision server 20504 that aggregates and manages various learning models may be provided via the network 20040. The learning model provision server 20504 provides the learning model not only to the electronic device 20001 but also to other devices, and thus other devices having the learning model may be generated. In addition, the learning model that is recorded in a removable memory card such as a flash memory may be provided. In the electronic device 20001, the learning model can be read and recorded from the memory card installed in the slot. Thereby, the electronic device 20001 can acquire the learning model when it is used in a harsh environment, when it has no communication function, or when it has a communication function but the amount of information that can be transmitted is small.

The electronic device 20001 can provide data such as image data, corrected data, and metadata to other devices via the network 20040. For example, the electronic device 20001 transmits data such as image data and corrected data to the learning model generation server 20503 via the network 20040. Thereby, the learning model generation server 20503 can generate a learning model using data such as image data and corrected data collected from one or more electronic devices 20001 as teacher data. When a larger amount of teacher data is used, it is possible to improve the accuracy of the learning process.

Data such as image data and corrected data may be provided not only directly from the electronic device 20001 to the learning model generation server 20503 but also may be provided from the data provision server 20505 that aggregates and manages various data items. The data provision server 20505 may collect data not only from the electronic device 20001 but also from other devices, and may provide data not only to the learning model generation server 20503 but also to other devices.

The learning model generation server 20503 may perform a relearning process in which data such as image data and corrected data provided from the electronic device 20001 or the data provision server 20505 is added as teacher data on the already generated learning model and may update the learning model. The updated learning model can be provided to the electronic device 20001. In the learning model generation server 20503, when the learning process or the relearning process is performed, the process can be performed regardless of the differences in specifications and performances in the electronic device 20001.

In addition, in the electronic device 20001, when a user performs a correct operation on corrected data or metadata (for example, when a user inputs correct information), feedback data related to the correction process may be used for the relearning process. For example, when feedback data is transmitted from the electronic device 20001 to the learning model generation server 20503, the learning model generation server 20503 can perform a relearning process using feedback data from the electronic device 20001 and update the learning model. Here, in the electronic device 20001, when a user performs the correct operation, the application provided by the application server 20506 may be used.

The relearning process may be performed by the electronic device 20001. In the electronic device 20001, when the relearning process using image data and feedback data is used and the learning model is updated, the learning model can be improved in the device. Thereby, the electronic device 20001 having the updated learning model is generated. In addition, the electronic device 20001 may transmit the updated learning model obtained in the relearning process to the learning model provision server 20504, and may provide it to other electronic devices 20001. Thereby, the updated learning model may be shared among the plurality of electronic devices 20001.

Alternatively, the electronic device 20001 may transmit difference information of the re-trained learning model (difference information about the learning model before update and the learning model after update) as update information to the learning model generation server 20503. The learning model generation server 20503 can generate an improved learning model based on update information from the electronic device 20001 and provide it to other electronic devices 20001. When such difference information is exchanged, privacy can be protected and the communication cost can be reduced as compared when all information is exchanged. Here, like the electronic device 20001, the sensor 20011/the optical sensor 20011 installed in the electronic device 20001 may perform the relearning process.

The application server 20506 is a server that can provide various applications via the network 20040. The application provides a predetermined function using data such as a learning model, corrected data, and metadata. The electronic device 20001 can execute the application downloaded from the application server 20506 via the network 20040 and thus can realize a predetermined function. Alternatively, the application server 20506 can acquire data from the electronic device 20001, for example, via an application programming interface (API), execute the application on the application server 20506, and thus realize a predetermined function.

In this manner, in a system including devices to which the present technology is applied, data such as a learning model, image data, and corrected data is exchanged and distributed between the devices, and various services using these data items can be provided. For example, it is possible to provide a service that provides a learning model via the learning model provision server 20504 and a service that provides data such as image data and corrected data via the data provision server 20505. In addition, it is possible to provide a service that provides applications via the application server 20506.

Alternatively, image data acquired from the sensor 20011/the optical sensor 20011 of the electronic device 20001 is input to the learning model provided by the learning model provision server 20504 and corrected data obtained as an output thereof may be provided. In addition, a device such as an electronic device that implements the learning model provided by the learning model provision server 20504 may be produced, generated and provided. In addition, when data such as a learning model, corrected data, and metadata is recorded in a readable storage medium, a storage medium in which these data items are recorded and a device such as an electronic device in which the storage medium is installed may be produced, generated and provided. The storage medium may be a non-volatile memory (non-temporary computer readable medium) such as a magnetic disk, an optical disc, a magneto-optical disc, and a semiconductor memory or may be a volatile memory such as a static random access memory (SRAM) and a dynamic random access memory (DRAM).

The above embodiments may have the following aspects.
(1) A data generation method which is a method of generating data by a processor, and in which training data used for optimizing an estimation model in machine learning is acquired from a CG model.
(2) The data generation method according to (1), wherein an image based on parameters of an imaging camera is acquired from the CG model.
(3) The data generation method according to (2), wherein the parameters of the camera include parameters related to a lens of the camera.
(4) The data generation method according to (3), wherein the parameters related to the lens of the camera are parameters based on at least one of a fisheye lens, a wide-angle lens, a telephoto lens, a macro lens and a standard lens.
(5) The data generation method according to (3) or (4), wherein the parameter related to the lens of the camera are parameters related to at least one of blur, distortion, shading, flares and ghosts caused by the lens of the camera.
(6) The data generation method according to any one of (2) to (5), wherein the parameters of the camera include parameters related to a light receiving sensor of the camera.
(7) The data generation method according to (6), wherein the parameters related to the sensor of the camera are parameters related to at least one of defects having a white pixel, a black pixel and a random pixel value.
(8) The data generation method according to (6) or (7), wherein the parameters related to the sensor of the camera are parameters related to at least one of image plane phase difference acquisition pixels, polarization pixels, IR acquisition pixels, UV acquisition pixels, distance measurement pixels and temperature pixels.
(9) The data generation method according to any one of (6) to (8), wherein the parameters related to the sensor of the camera are parameters related to at least one of color filter characteristics, spectral characteristics, color filter arrangement, temperature characteristics, transformation efficiency, sensitivity and read order.
(10) The data generation method according to any one of (1) to (9), wherein a compressed image based on parameters related to data compression is acquired for an image transformed by parameters of an imaging camera acquired from the CG model.
(11) The data generation method according to (10), wherein the parameters related to data compression include parameters related to at least one of a compression algorithm, a compression rate, a bit rate, a gradation and a color space transformation.
(12) The data generation method according to any one of (1) to (11), wherein a multispectral image and a hyperspectral image are acquired from the CG model.
(13) The data generation method according to any one of (1) to (12), wherein an image is acquired based on imaging conditions from the CG model.
(14) The data generation method according to (13), wherein the imaging conditions relate to at least one of a type, a position and a direction of a light source.
(15) The data generation method according to (13) or (14), wherein the imaging conditions relate to saturation of a pixel value.
(16) The data generation method according to any one of (13) to (15), wherein the imaging conditions relate to exposure.
(17) The data generation method according to any one of (1) to (16), wherein a normal image that is an input image of the estimation model and an ideal image that is a desirable output image when the normal image is input are separately acquired from the CG model.
(18) The data generation method according to (17), wherein the normal image and the ideal image are acquired from the CG model using the method according to at least any one of (2) to (17).
(19) The data generation method according to (17) or (18), wherein the ideal image is acquired by adding an annotation to the CG model.
(20) The data generation method according to (19), wherein the annotation is added for each area or for each pixel of the ideal image.
(21) The data generation method according to (19) or (20), wherein the annotation is added by being transformed by geometric transformation in the same transformation as the transformation in which the ideal image is generated from the CG model.
(22) A learning method including optimizing the estimation model using training data acquired using the data generation method according to any one of (1) to (21).
(22) An estimation method including executing an estimation using the estimation model optimized using training data acquired using the data generation method according to any one of (1) to (21).
(23) A data generation device, a learning device or an estimation device including a processor for executing the method according to any one of (1) to (22).

In addition, the following aspects can be provided.

(1) An image generation method including acquiring a CG model or an artificial image generated based on the CG model; and performing, by a processor, processing on the CG model or the artificial image, and generating metadata of a processed image used for AI learning used for an image acquired by a sensor or the artificial image.

In addition, a recording medium generation method includes storing an image generated by the image method in a recording medium.

(2) The image generation method according to (1), further including: selecting at least one parameter for processing the CG model or the artificial image; and applying to the CG model or the artificial image based on the selected parameter at a timing at which the CG model or the artificial image is generated.

(3) The image generation method according to (2),
wherein the at least one parameter is a parameter related to the sensor.

(4) The image generation method according to (3),
wherein the sensor includes at least a camera.

(5) The image generation method according to (4),
wherein the AI used for the image acquired by the sensor is used to correct a change in the image caused by the sensor or the camera.

(6) The image generation method according to (1), further including recording metadata of the processed image or the artificial image in a recording medium.

(7) The image generation method according to (6),
wherein the metadata of the processed image or the artificial image is associated with the artificial image and recorded in the storage medium.

(8) An image generation device, including a processor, wherein the processor acquires a CG model or an artificial image generated based on the CG model, and performs processing on the CG model or the artificial image and generates metadata of a processed image used for AI learning used for an image acquired by a sensor or the artificial image.

(9) A non-temporary computer readable medium storing a program that executes an image generation method when a processor is executed, the method including: acquiring a CG model or an artificial image generated based on the CG model; and performing processing on the CG model or the artificial image and generating metadata of a processed image used for AI learning used for an image acquired by a sensor or the artificial image.

(10) A learning model generation method which is a learning model generation method of AI used for an image acquired by a sensor, the method including: acquiring first image data; acquiring second image data different from the first image data; and generating the learning model that outputs an image corresponding to the second image data when the first image data is input based on the first image data and the second image data, wherein the first image data is a CG model or an artificial image generated based on the CG model, and wherein the second image data is data obtained by performing processing by a processor on the CG model or the artificial image generated based on the CG model.

(11) The learning model generation method according to (10), wherein the second image data is metadata of the second image.

(12) A learning model generation device which includes a processor and generates an AI learning model used for an image acquired by a sensor, wherein the processor acquires first image data, acquires second image data different from the first image data, and generates the learning model that outputs an image corresponding to the second image data when the first image data is input based on the first image data and the second image data, wherein the first image data is a CG model or an artificial image generated based on the CG model, and wherein the second image data is data obtained by performing processing on the CG model or the artificial image generated based on the CG model by the same processor as the processor or a processor different from the processor.

(13) A non-temporary computer readable medium storing a program, in which, when the program is executed by a processor, the program executes a learning model generation method including acquiring first image data, acquiring second image data different from the first image data, and generating the learning model that outputs an image corresponding to the second image data when the first image data is input based on the first image data and the second image data, wherein the first image data is a CG model or an artificial image generated based on the CG model, and wherein the second image data is data obtained by performing processing on the CG model or the artificial image generated based on the CG model by the same processor as the processor or a processor different from the processor.

(14) An inference method of executing inference with an AI learning model used for an image acquired by a sensor, the inference method including: by a processor, acquiring input image data; and acquiring a processing result of the learning model from the learning model to which the input image data is input, wherein the learning model is a model generated by acquiring first image data and second image data different from the first image data, and learning based on the first image data and the second image data, wherein the first image data is an artificial image that is artificially generated, and wherein the second image data is data obtained by performing processing on the first image.

(15) An electronic device that executes inference with an AI learning model used for an image acquired by a sensor, the electronic device including a control device, wherein the control device, when input image data is input, inputs the input image data to the learning model, acquires a processing result of the learning model to which the input image data is input, and outputs the acquired processing result, and wherein the learning model is a model trained with an artificial image that is artificially generated and a processed image obtained by performing processing on the artificial image.

(16) A program causing a processor to execute an inference method that executes inference with an AI learning model used for an image acquired by a sensor, wherein the inference method includes acquiring input image data, and acquiring a processing result of the learning model from the learning model to which the input image data is input, wherein the learning model is a model generated by acquiring first image data and second image data different from the first image data, and learning based on the first image data and the second image data, wherein the first image data is an artificial image that is artificially generated, and wherein the second image data is data obtained by performing processing on the first image.

(17) A generation method of generating an AI learning model used for an image acquired by a sensor, the generation method, including training a learning model in which, based on an artificial image that is artificially generated and a processed image obtained by performing processing on the artificial image, when an image corresponding to the artificial image acquired by a sensor is input, an image corresponding to the processed image is output.

(18) An electronic device generation method, including recording the learning model generated according to (17) in a non-temporary computer readable medium included in an electronic device.

(19) An AI learning model used for an image acquired by a sensor, the learning model including: a plurality of layers composed of a plurality of nodes, wherein each of the plurality of layers has a function and each of the plurality of nodes in each of the plurality of layers is connected to one or more nodes of the other layers of the plurality of layers via an edge, and wherein the edge has a weight based on an artificial image that is artificially generated and a processed image obtained by performing processing on the artificial image.

(20) A non-temporary computer readable medium in which an AI learning model used for an image acquired by a sensor is recorded, wherein the learning model includes a plurality of layers composed of a plurality of nodes, wherein each of the plurality of layers has a function and each of the plurality of nodes in each of the plurality of layers is connected to one or more nodes of the other layers of the plurality of layers via an edge, and wherein, for the edge, weight information obtained based on an artificial image that is artificially generated and a processed image obtained by performing processing on the artificial image is recorded in association with the edge.

(21) A data processing method that processes data based on a result from a learning model, including: inputting a result of a learning model; generating processing data based on the result of the learning model; and outputting the processing data, wherein the result from the learning model is acquired by inputting acquired image data to a pre-trained learning model, and wherein the pre-trained learning model is trained with an artificial image that is artificially generated and a processed image obtained by performing processing on the artificial image.

(22) A data processing device that processes data based on a result from a learning model, including a processor that executes inputting a result of a learning model, generating processing data based on the result of the learning model, and outputting the processing data, wherein the result from the learning model is acquired by inputting acquired image data to a pre-trained learning model, and wherein the pre-trained learning model is trained with an artificial image that is artificially generated and a processed image obtained by performing processing on the artificial image.

(23) A program causing a processor to execute a data processing method of processing data based on a result from a learning model, wherein the data processing method includes inputting a result of a learning model, generating processing data based on the result of the learning model, and outputting the processing data, wherein the result from the learning model is acquired by inputting acquired image data to a pre-trained learning model, and wherein the pre-trained learning model is trained with an artificial image that is artificially generated and a processed image obtained by performing processing on the artificial image.

(24) An image generation method of generating an image used in AI learning, including: inputting an artificial image that is artificially generated; generating a processed image obtained by performing processing on the artificial image; and outputting the processed image.

(25) The image generation method according to (15).

(26) The image generation method according to (1), wherein the artificial image is an image generated by a computer graphics.

(27) The image generation method according to (1), wherein the artificial image includes metadata, and wherein the metadata is used to add an annotation.

(28) The image generation method according to (1), wherein the processed image and the artificial image corresponding to the processed image are associated and recorded.

The aspects of the present disclosure are not limited to the above embodiments, but include various possible modifications, and the effects of the present disclosure are not limited to the above contents. The components in the embodiments may be applied in appropriate combinations. That is, various additions, alternations and partial deletions can be made without departing from the conceptual idea and purpose of the present disclosure derived from the contents defined in the scope of the claims and equivalents thereof.

### [Reference Signs List]

- 1: Data generation system
- 2: CG generator
- 3: Simulator
- 300: Input/output I/F
- 302: Storage unit
- 304: Normal model application unit
- 306: Ideal model application unit
- 308: Annotation adding unit
- 4: Machine learning system
- 5: Machine learning device

## Claims

1. An image generation method, comprising:
acquiring a CG model or an artificial image generated based on the CG model; and
performing, by a processor, processing on the CG model or the artificial image, and generating metadata of a processed image used for AI learning used for an image acquired by a sensor or the artificial image.

2. The image generation method according to claim 1, further comprising:
selecting at least one parameter for processing the CG model or the artificial image; and
applying to the CG model or the artificial image based on the selected parameter at a timing at which the CG model or the artificial image is generated.

3. The image generation method according to claim 2,
wherein the at least one parameter is a parameter related to the sensor.

4. The image generation method according to claim 3,
wherein the sensor includes at least a camera.

5. The image generation method according to claim 4,
wherein the AI used for the image acquired by the sensor is used to correct a change in the image caused by the sensor or the camera.

6. The image generation method according to claim 1, further comprising recording metadata of the processed image or the artificial image in a recording medium.

7. The image generation method according to claim 6,
wherein the metadata of the processed image or the artificial image is associated with the artificial image and recorded in the storage medium.

8. A recording medium generation method, comprising storing an image generated by the image generation method according to claim 1 in a recording medium.

9. An image generation device, comprising
a processor,
wherein the processor acquires a CG model or an artificial image generated based on the CG model, and
performs processing on the CG model or the artificial image and generates metadata of a processed image used for AI learning used for an image acquired by a sensor or the artificial image.

10. A non-temporary computer readable medium storing a program that executes an image generation method when a processor is executed, the method including:
acquiring a CG model or an artificial image generated based on the CG model; and
performing processing on the CG model or the artificial image and generating metadata of a processed image used for AI learning used for an image acquired by a sensor or the artificial image.

11. A learning model generation method which is a learning model generation method of AI used for an image acquired by a sensor, the method comprising:
acquiring first image data;
acquiring second image data different from the first image data; and
generating the learning model that outputs an image corresponding to the second image data when the first image data is input based on the first image data and the second image data,
wherein the first image data is a CG model or an artificial image generated based on the CG model, and
wherein the second image data is data obtained by performing processing by a processor on the CG model or the artificial image generated based on the CG model.

12. The learning model generation method according to claim 11,
wherein the second image data is metadata of the second image.

13. A learning model generation device which includes a processor and generates an AI learning model used for an image acquired by a sensor,
wherein the processor
acquires first image data,
acquires second image data different from the first image data, and
generates the learning model that outputs an image corresponding to the second image data when the first image data is input based on the first image data and the second image data,
wherein the first image data is a CG model or an artificial image generated based on the CG model, and
wherein the second image data is data obtained by performing processing on the CG model or the artificial image generated based on the CG model by the same processor as the processor or a processor different from the processor.

14. A non-temporary computer readable medium storing a program, in which, when the program is executed by a processor, the program executes a learning model generation method including acquiring first image data, acquiring second image data different from the first image data, and generating the learning model that outputs an image corresponding to the second image data when the first image data is input based on the first image data and the second image data,
wherein the first image data is a CG model or an artificial image generated based on the CG model, and
wherein the second image data is data obtained by performing processing on the CG model or the artificial image generated based on the CG model by the same processor as the processor or a processor different from the processor.

15. An inference method of executing inference with an AI learning model used for an image acquired by a sensor, the inference method comprising:
by a processor,
acquiring input image data; and
acquiring a processing result of the learning model from the learning model to which the input image data is input,
wherein the learning model is a model generated by acquiring first image data and second image data different from the first image data, and learning based on the first image data and the second image data,
wherein the first image data is an artificial image that is artificially generated, and
wherein the second image data is data obtained by performing processing on the first image.

16. An electronic device that executes inference with an AI learning model used for an image acquired by a sensor, the electronic device comprising a control device,
wherein the control device, when input image data is input, inputs the input image data to the learning model, acquires a processing result of the learning model to which the input image data is input, and outputs the acquired processing result, and
wherein the learning model is a model trained with an artificial image that is artificially generated and a processed image obtained by performing processing on the artificial image.

17. A program causing a processor to execute an inference method that executes inference with an AI learning model used for an image acquired by a sensor,
wherein the inference method includes
acquiring input image data, and
acquiring a processing result of the learning model from the learning model to which the input image data is input,
wherein the learning model is a model generated by acquiring first image data and second image data different from the first image data, and learning based on the first image data and the second image data,
wherein the first image data is an artificial image that is artificially generated, and
wherein the second image data is data obtained by performing processing on the first image.

18. A generation method of generating an AI learning model used for an image acquired by a sensor, the generation method, comprising
training a learning model in which, based on an artificial image that is artificially generated and a processed image obtained by performing processing on the artificial image, when an image corresponding to the artificial image acquired by a sensor is input, an image corresponding to the processed image is output.

19. An electronic device generation method, comprising
recording the learning model generated according to claim 18 in a non-temporary computer readable medium included in an electronic device.

20. An AI learning model used for an image acquired by a sensor, the learning model comprising:
a plurality of layers composed of a plurality of nodes,
wherein each of the plurality of layers has a function and each of the plurality of nodes in each of the plurality of layers is connected to one or more nodes of the other layers of the plurality of layers via an edge, and
wherein the edge has a weight based on an artificial image that is artificially generated and a processed image obtained by performing processing on the artificial image.

21. A data processing method that processes data based on a result from a learning model, comprising:
inputting a result of a learning model;
generating processing data based on the result of the learning model; and
outputting the processing data,
wherein the result from the learning model is acquired by inputting acquired image data to a pre-trained learning model, and
wherein the pre-trained learning model is trained with an artificial image that is artificially generated and a processed image obtained by performing processing on the artificial image.

22. A data processing device that processes data based on a result from a learning model, comprising a processor that executes
inputting a result of a learning model,
generating processing data based on the result of the learning model, and outputting the processing data,
wherein the result from the learning model is acquired by inputting acquired image data to a pre-trained learning model, and
wherein the pre-trained learning model is trained with an artificial image that is artificially generated and a processed image obtained by performing processing on the artificial image.

23. A program causing a processor to execute a data processing method of processing data based on a result from a learning model,
wherein the data processing method includes
inputting a result of a learning model,
generating processing data based on the result of the learning model, and outputting the processing data,
wherein the result from the learning model is acquired by inputting acquired image data to a pre-trained learning model, and
wherein the pre-trained learning model is trained with an artificial image that is artificially generated and a processed image obtained by performing processing on the artificial image.

24. An image generation method of generating an image used in AI learning, comprising:
inputting an artificial image that is artificially generated;
generating a processed image obtained by performing processing on the artificial image; and
outputting the processed image.
